(19) Europäisches Patentamt
European Patent Office
Office européen des brevets

(11) **EP 4 815 347 A1**

(12) **EUROPEAN PATENT APPLICATION**
published in accordance with Art. 153(4) EPC

(43) Date of publication:
**30.09.2026 Bulletin 2026/40**

(21) Application number: **23959535.8**

(22) Date of filing: **22.11.2023**

(51) International Patent Classification (IPC):
***H04L 1/00*** *(2006.01)* ***H04L 1/08*** *(2006.01)*

(52) Cooperative Patent Classification (CPC):
**H04L 1/00; H04L 1/08**

(86) International application number:
**PCT/KR2023/018885**

(87) International publication number:
**WO 2025/110278 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **LG Electronics Inc.**
**Yeongdeungpo-gu**
**Seoul 07336 (KR)**

(72) Inventors:
- **JUNG, Ikjoo**
  **Seoul 06772 (KR)**
- **LEE, Sangrim**
  **Seoul 06772 (KR)**
- **KWON, Soonhee**
  **Seoul 06772 (KR)**
- **LEE, Taehyun**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

# (54) METHOD AND APPARATUS FOR PERFORMING ERROR CORRECTION ON BASIS OF SEMANTIC COMMUNICATION IN WIRELESS COMMUNICATION SYSTEM

(57) The present disclosure relates to a method for operating a first node in a wireless communication system, comprising the steps of: establishing a connection with a second node; receiving a first node capability information request from the second node; transmitting first node capability information to the second node on the basis of the first node capability information request; receiving semantic communication indication information from the second node; and encoding data by using an attention technique through semantic communication-related information in the received semantic communication indication information and transmitting the encoded data to the second node, wherein the first node may encode the data on the basis of whether a first bitwise operation attention map is received from the second node and the number of semantic data retransmissions, and transmit the encoded data to the second node.

FIG. 24

2410
Destination
Received semantic packets
2411
Semantic packet decomposer
Received semantic representation
2412
Decoder
Reconstructed data
2413
Reconstructed data type checker
data type = Residual area data
2414
Checker for performing semantic error checking
Error check = No / Data type = composited data
data type = Original data
Received bitwise attention map
2415
Data type configurator
2416
Encoder
Error check = yes / Data type = residual data
Error check = No
Attention matrices
2417
Attention map generator
2418
Composited data
Data compositor
Saved reconstructed data (Semantic error correction target)
Bitwise attention map
2419
Error occur = False
Data type = residual area data
2420
Data type ≠ residual area data
Semantic error checker
Reconstructed data type checker
Downstream task 1
Downstream task 2
Downstream task 3
Downstream task N
Saved bitwise attention map
Error occur = True
2421
Early stop = True
Early stopping checker
Early stop = False
Save data
2422
2423
bitwise attention map based packet generator
System failure operator
Bitwise attention map based packets
System failure message

EP 4 815 347 A1

## Description

### TECHNICAL FIELD

The following description relates to a method and device for performing error correction based on semantic communication in a wireless communication system. Specifically, the following description relates to a method and device for performing error detection based on an attention map in a wireless communication system and performing error correction based thereon.

### BACKGROUND ART

Radio access systems have come into widespread in order to provide various types of communication services such as voice or data. In general, a radio access system is a multiple access system capable of supporting communication with multiple users by sharing available system resources (bandwidth, transmit power, etc.). Examples of the multiple access system include a code division multiple access (CDMA) system, a frequency division multiple access (FDMA) system, a time division multiple access (TDMA) system, a single carrier-frequency division multiple access (SC-FDMA) system, etc.

In particular, as many communication apparatuses require a large communication capacity, an enhanced mobile broadband (eMBB) communication technology has been proposed compared to radio access technology (RAT). In addition, not only massive machine type communications (MTC) for providing various services anytime anywhere by connecting a plurality of apparatuses and things but also communication systems considering services/user equipments (UEs) sensitive to reliability and latency have been proposed. To this end, various technical configurations have been proposed.

### DISCLOSURE

### TECHNICAL PROBLEM

The present disclosure relates to a method and device for performing semantic communication in a wireless communication system.

The present disclosure relates to a method and device for performing error correction based on semantic communication in a wireless communication system.

The present disclosure relates to a method and device for performing error correction based on an attention map based on semantic communication in a wireless communication system.

The present disclosure relates to a method and device for performing semantic communication based on bitwise attention feedback received by a source and a retransmission count based on semantic communication in a wireless communication system.

The present disclosure relates to a method and device for performing, by a destination, error correction based on whether semantic error check is performed based on semantic communication in a wireless communication system.

The present disclosure relates to a method and device for determining, by a destination, whether to perform early stopping upon semantic error detection based on semantic communication in a wireless communication system.

The above-described aspects of the present disclosure are only some of the preferred embodiments of the present disclosure, and various embodiments reflecting the technical features of the present disclosure may be derived and understood by those skilled in the art based on the following detailed description of the present disclosure.

### TECHNICAL SOLUTION

According to an embodiment of the present disclosure, a method performed by a first node in a wireless communication system, the method may include: establishing a connection with a second node; receiving, from the second node, a request for first node capability information; based on the request for the first node capability information, transmitting, to the second node, the first node capability information; receiving, from the second node, semantic communication indication information; and transmitting, to the second node, data encoded with an attention technique through semantic communication-related information in the semantic communication indication information, and the first node transmits, to the second node, the data by encoding the data based on whether a first bitwise attention map is received from the second node and a semantic data retransmission count.

According to an embodiment of the present disclosure, a method performed by a second node in a wireless communication system, the method may include: establishing a connection with a first node; transmitting, to the first node, a request for first node capability information; based on the request for the first node capability information, receiving, from

the first node, the first node capability information; transmitting, to the first node, semantic communication indication information; and receiving, from the first node, data encoded with an attention technique through semantic communication-related information in the semantic communication indication information, and the second node performs a downstream task through the data received from the first node based on whether semantic error check is performed and whether a semantic error occurs

According to an embodiment of the present disclosure, the semantic communication-related information in the semantic communication indication information includes at least one of an encoder model, a decoder model, an attention matrix operation scheme, a fusion matrix, an attention value discard ratio, a bitwise attention map threshold, an error detection threshold, a maximum retransmission count, or an early stopping threshold

According to an embodiment of the present disclosure, based on that the data to be transmitted to the second node exists, the first node compares the semantic data retransmission count with a maximum retransmission count.

According to an embodiment of the present disclosure, based on that the semantic data retransmission count is less than the maximum value and the first node receives the first bitwise attention map from the second node, the first node generates residual area data used for correcting a semantic error and performs the encoding, and based on that the semantic data retransmission count is less than the maximum value and the first node does not receive the first bitwise attention map from the second node, the first node determines the data transmitted to the second node as new data and performs the encoding.

According to an embodiment of the present disclosure, the encoding is performed based on at least one of an attention matrix operation scheme, a fusion matrix, or an attention value discard ratio, and the first node generates a semantic representation and a second bitwise attention map based on the encoding, and transmits, to the second node, a semantic packet including the semantic representation and the second bitwise attention map.

According to an embodiment of the present disclosure, based on that the first bitwise attention map received by the first node is a semantic-level reconstructed data-based bitwise attention map, the first node obtains a residual area-based bitwise attention map by comparing an original data-based bitwise attention map with the semantic-level reconstructed data-based bitwise attention map, and the first node generates the residual area data based on the residual area-based bitwise attention map.

According to an embodiment of the present disclosure, based on that the first bitwise attention map received by the first node is a residual area data-based bitwise attention map used for correcting a semantic error, the first node generates the residual area data based on the residual area data-based bitwise attention map.

According to an embodiment of the present disclosure, based on that the semantic data retransmission count is greater than the maximum value, the first node performs a system failure operation.

According to an embodiment of the present disclosure, based on the system failure operation, the first node performs at least one of system failure message transmission, semantic error correction re-configuration, or data update.

## ADVANTAGEOUS EFFECTS

According to embodiments based on the present disclosure, the following effects may be obtained.

According to the present disclosure, a method for performing semantic communication in a wireless communication system may be provided.

According to the present disclosure, a method for performing error correction based on semantic communication in a wireless communication system may be provided.

According to the present disclosure, a method for performing error correction based on an attention map based on semantic communication in a wireless communication system may be provided.

According to the present disclosure, a method for performing semantic communication based on bitwise attention feedback received by a source and a retransmission count based on semantic communication in a wireless communication system may be provided.

According to the present disclosure, a method for performing, by a destination, error correction based on whether semantic error check is performed based on semantic communication in a wireless communication system may be provided.

According to the present disclosure, a method for determining, by a destination, whether to perform early stopping upon semantic error detection based on semantic communication in a wireless communication system may be provided.

Effects obtainable in embodiments of the present disclosure are not limited to the effects mentioned above, and other effects not mentioned may be clearly derived and understood by those skilled in the art to which the technical configuration of the present disclosure is applied from the following description of embodiments of the present disclosure. For example, even unintended effects resulting from implementing the configuration described in the present disclosure may be derived by those skilled in the art from the embodiments of the present disclosure.

## BRIEF DESCRIPTION OF THE DRAWINGS

The accompanying drawings are provided to help understanding of the present disclosure, and may provide embodiments of the present disclosure together with a detailed description. However, the technical features of the present disclosure are not limited to specific drawings, and the features disclosed in each drawing may be combined with each other to constitute a new embodiment. Reference numerals in each drawing may refer to structural elements.

FIG. 1 shows an example of a communication system applicable to the present disclosure.

FIG. 2 shows an example of a wireless device applicable to the present disclosure.

FIG. 3 shows a method for processing a transmission signal applicable to the present disclosure.

FIG. 4 shows a communication procedure between a UE and a base station applicable to the present disclosure.

FIG. 5 shows an example of a communication structure capable of being provided in a sixth generation (6G) system applicable to the present disclosure.

FIG. 6 shows an electromagnetic spectrum applicable to the present disclosure.

FIG. 7 shows a THz wireless transceiver applicable to the present disclosure.

FIG. 8 shows a THz signal generation method applicable to the present disclosure.

FIG. 9 shows a wireless communication transceiver applicable to the present disclosure.

FIG. 10 shows a transmitter structure applicable to the present disclosure.

FIG. 11 shows a modulator structure applicable to the present disclosure.

FIG. 12 shows a structure of a perceptron included in an artificial neural network applicable to the present disclosure.

FIG. 13 shows an artificial neural network structure applicable to the present disclosure.

FIG. 14 shows a communication model divided into three levels applicable to the present disclosure.

FIG. 15 shows a method for translating English, which is an input word, into French, which is an output word, based on an attention technique applicable to the present disclosure.

FIG. 16 shows a method for applying an attention technique using a transformer model when a data modality applicable to the present disclosure is an image.

FIG. 17 shows a method for performing semantic communication applicable to the present disclosure.

FIG. 18 shows a semantic error applicable to the present disclosure.

FIG. 19 shows a method for operating a plurality of downstream tasks located at a destination when a modality of input data applicable to the present disclosure is an image.

FIG. 20 shows a method for performing error detection applicable to the present disclosure.

FIG. 21 shows a source structure for performing attention map-based semantic error correction applicable to the present disclosure.

FIG. 22 shows a method for obtaining residual area data used for correcting a semantic error at a source after error detection applicable to the present disclosure.

FIG. 23 shows a residual area data-based bitwise attention map used for correcting a semantic error applicable to the

present disclosure.

FIG. 24 shows a destination structure for performing semantic error correction applicable to the present disclosure.

FIG. 25 shows an ARC operation for residual area data used for correcting a semantic error applicable to the present disclosure.

FIG. 26 shows a method for performing data synthesis with data to be error-corrected without semantic error detection for reconstructed data based on residual area data applicable to the present disclosure.

FIG. 27 shows a case in which a semantic error rate increases in data obtained by synthesizing residual area data-based semantic-level reconstructed data used for correcting a semantic error applicable to the present disclosure.

FIG. 28 shows a method for obtaining an attention map based on synthesized data applicable to the present disclosure and performing semantic error check based thereon.

FIG. 29 shows an initial configuration method for semantic communication applicable to the present disclosure.

FIG. 30 shows a source operation method applicable to the present disclosure.

FIG. 31 shows a destination operation method applicable to the present disclosure.

FIG. 32 is a flowchart showing a method for operating a first node applicable to the present disclosure.

FIG. 33 shows a method for operating a second node applicable to the present disclosure.

## MODE FOR INVENTION

The embodiments of the present disclosure described below are combinations of elements and features of the present disclosure in specific forms. The elements or features may be considered selective unless otherwise mentioned. Each element or feature may be practiced without being combined with other elements or features. Further, the embodiment(s) of the present disclosure may be constructed by combining parts of the elements and/or features. Operation orders described in the embodiment(s) of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. In this case, the term "BS" may be replaced with a fixed station, a Node B, an eNode B (eNB), a gNode B (gNB), an ng-eNB, an advanced base station (ABS), an access point, etc.

In addition, in the embodiments of the present disclosure, the term terminal may be replaced with a user equipment (UE), a mobile station (MS), a subscriber station (SS), a mobile subscriber station (MSS), a mobile terminal, an advanced mobile station (AMS), etc.

In addition, a transmitter is a fixed and/or mobile node that provides a data service or a call service and a receiver is a fixed and/or mobile node that receives a data service or a call service. Therefore, a mobile station may serve as a

transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd generation partnership project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 38.211, 3GPP TS 38.212, 3GPP TS 38.213, 3GPP TS 38.321 and 3GPP TS 38.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

For example, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology after TS Release 17 and/or Release 18. "xxx" may refer to a detailed number of a standard document. LTE/NR/6G may be collectively referred to as a 3GPP system.

For background arts, terms, abbreviations, etc. used in the present disclosure, refer to matters described in the standard documents published prior to the present disclosure. For example, reference may be made to the standard documents 36.xxx and 38.XXX.

Communication System Applicable to the Present Disclosure

Without being limited thereto, various descriptions, functions, procedures, proposals, methods and/or operational flowcharts of the present disclosure disclosed herein are applicable to various fields requiring wireless communication/connection (e.g., 5G).

Hereinafter, a more detailed description will be given with reference to the drawings. In the following drawings/description, the same reference numerals may exemplify the same or corresponding hardware blocks, software blocks or functional blocks unless indicated otherwise.

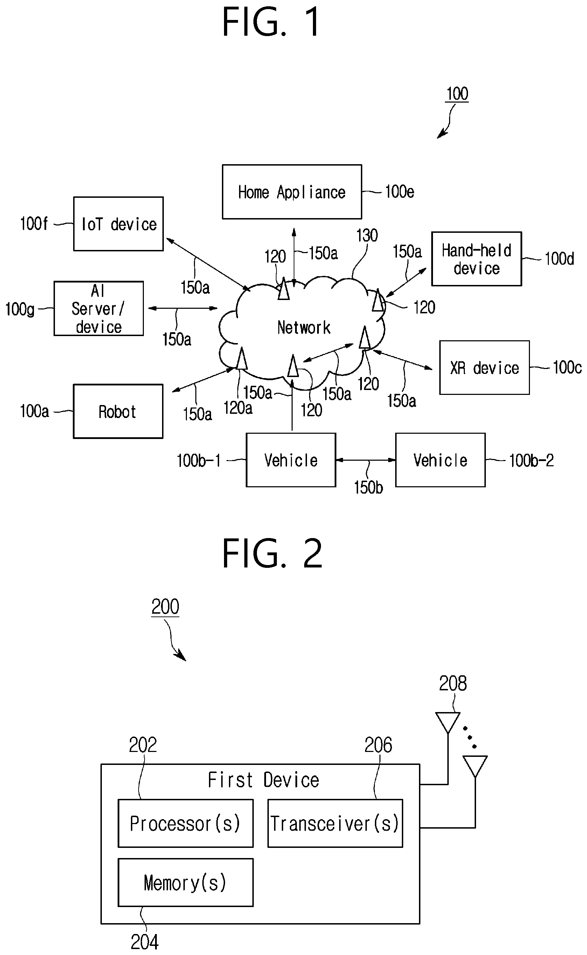

FIG. 1 shows an example of a communication system to which the present disclosure is applied.

Referring to FIG. 1, a communication system (100) to which the present disclosure is applied includes a wireless device, a base station, and a network. Here, the wireless device means a device performing communication by using a wireless access technology (e.g., LTE, LTE-A, LTE-A Pro, NR, 5G, 5G-A, 6G), and may be referred to as a communication/wireless/5G device. Although not limited thereto, the wireless device may include a robot (100a), vehicles (100b-1, 100b-2), an extended reality (XR) device (100c), a hand-held device (100d), a home appliance (100e), an Internet of Things (IoT) device (100f), and an artificial intelligence (AI) device/server (100g). For example, the vehicle may include a vehicle equipped with a wireless communication function, an autonomous driving vehicle, a vehicle capable of performing vehicle-to-vehicle communication, and the like. Here, the vehicles (100b-1, 100b-2) may include an unmanned aerial vehicle (UAV) (e.g., a drone). The XR device (100c) includes an augmented reality (AR)/virtual reality (VR)/mixed reality (MR) device, and may be implemented in the form of a head-mounted device (HMD), a head-up display (HUD) provided in a vehicle, a television, a smartphone, a computer, a wearable device, a home appliance, digital signage, a vehicle, a robot, and the like. The hand-held device (100d) may include a smartphone, a smart pad, a wearable device (e.g., a smart watch, smart glasses), a computer (e.g., a laptop), and the like. The home appliance (100e) may include a TV, a refrigerator, a washing machine, and the like. The IoT device (100f) may include a sensor, a smart meter, and the like. For example, the base station (120) and the network (130) may also be implemented as wireless devices, and a specific wireless device (120a) may operate as a base station/network node for another wireless device.

The wireless devices (100a to 100f) may be connected to the network (130) through the base station (120). AI technology may be applied to the wireless devices (100a to 100f), and the wireless devices (100a to 100f) may be

connected to the AI server (100g) through the network (130). The network (130) may be configured by using a 3G network, a 4G (e.g., LTE) network, a 5G (e.g., NR) network, or a 6G network. The wireless devices (100a to 100f) may communicate with each other through the base station (120)/the network (130), but may also directly communicate (e.g., sidelink communication) without passing through the base station (120)/the network (130). For example, the vehicles (100b-1, 100b-2) may perform direct communication (e.g., vehicle-to-vehicle (V2V)/vehicle-to-everything (V2X) communication). In addition, the IoT device (100f) (e.g., a sensor) may directly communicate with another IoT device (e.g., a sensor) or another wireless device (100a to 100f).

Wireless communication/connection (150a, 150b, 150c) may be made between the wireless devices (100a to 100f)/the base station (120), and between the base station (120)/the base station (120). Here, the wireless communication/connection may be made through various wireless access technologies, such as uplink/downlink communication (150a), sidelink communication (150b) (or D2D communication), and inter-base station communication (150c) (e.g., relay, integrated access backhaul (IAB)). Through the wireless communication/connection (150a, 150b, 150c), the wireless device and the base station/wireless device, and the base station and the base station may transmit/receive wireless signals to/from each other. For example, the wireless communication/connection (150a, 150b, 150c) may transmit/receive signals through various physical channels. For this purpose, based on various proposals of the present disclosure, at least some of various configuration information configuration procedures for transmission/reception of wireless signals, various signal processing procedures (e.g., channel encoding/decoding, modulation/demodulation, resource mapping/demapping), resource allocation procedures, and the like may be performed.

Apparatus applicable to the present disclosure

FIG. 2 shows an example of a wireless device to which the present disclosure may be applied.

Referring to FIG. 2, the wireless device (200) may transmit/receive wireless signals through various wireless access technologies (e.g., LTE, LTE-A, LTE-A Pro, NR, 5G, 5G-A, 6G). The wireless device (200) includes at least one processor (202) and at least one memory (204), and may further include at least one transceiver (206) and/or at least one antenna (208).

The processor (202) controls the memory (204) and/or the transceiver (206), and may be configured to implement the descriptions, functions, procedures, proposals, methods, and/or operation flowcharts disclosed in this document. For example, the processor (202) may process information in the memory (204) to generate first information/a first signal, and then transmit a wireless signal including the first information/the first signal through the transceiver (206). In addition, the processor (202) may receive a wireless signal including second information/a second signal through the transceiver (206), and then store information obtained from signal processing of the second information/the second signal in the memory (204). The memory (204) may be connected to the processor (202), and may store various kinds of information related to the operation of the processor (202). For example, the memory (204) may store software code including instructions for performing some or all of processes controlled by the processor (202), or for performing the descriptions, functions, procedures, proposals, methods, and/or operation flowcharts disclosed in this document. Here, the processor (202) and the memory (204) may be part of a communication modem/circuit/chip designed to implement wireless communication technology. The transceiver (206) may be connected to the processor (202), and may transmit and/or receive wireless signals through at least one antenna (208). The transceiver (206) may include a transmitter and/or a receiver. The transceiver (206) may be used interchangeably with an RF unit. In the present disclosure, the wireless device may also mean a communication modem/circuit/chip.

Hereinafter, hardware elements of the wireless device (200) will be described in more detail. Although not limited thereto, at least one protocol layer may be implemented by at least one processor (202). For example, at least one processor (202) may implement at least one layer (e.g., a functional layer such as a physical (PHY), a medium access control (MAC), an radio link control (RLC), a packet data convergence protocol (PDCP), an radio resource control (RRC), or an service data adaptation protocol (SDAP)). At least one processor (202) may generate at least one protocol data unit (PDU) and/or at least one service data unit (SDU) according to the descriptions, functions, procedures, proposals, methods, and/or operation flowcharts disclosed in this document. At least one processor (202) may generate a message, control information, data, or information according to the descriptions, functions, procedures, proposals, methods, and/or operation flowcharts disclosed in this document. At least one processor (202) may generate a signal (e.g., a baseband signal) including a PDU, an SDU, a message, control information, data, or information according to the functions, procedures, proposals, and/or methods disclosed in this document, and may provide the signal to at least one transceiver (206). At least one processor (202) may receive a signal (e.g., a baseband signal) from at least one transceiver (206), and may obtain a PDU, an SDU, a message, control information, data, or information according to the descriptions, functions, procedures, proposals, methods, and/or operation flowcharts disclosed in this document.

At least one processor (202) may be referred to as a controller, a microcontroller, a microprocessor, or a microcomputer. At least one processor (202) may be implemented by hardware, firmware, software, or a combination thereof. For example, at least one application specific integrated circuit (ASIC), at least one digital signal processor (DSP), at least one digital signal processing device (DSPD), at least one programmable logic device (PLD), or at least one field programmable gate array (FPGA) may be included in at least one processor (202). The descriptions, functions,

procedures, proposals, methods, and/or operation flowcharts disclosed in this document may be implemented by using firmware or software, and the firmware or software may be implemented to include modules, procedures, functions, and the like. The firmware or software configured to perform the descriptions, functions, procedures, proposals, methods, and/or operation flowcharts disclosed in this document may be included in at least one processor (202), or may be stored in at least one memory (204) and driven by at least one processor (202). The descriptions, functions, procedures, proposals, methods, and/or operation flowcharts disclosed in this document may be implemented by using firmware or software in the form of code, instructions, and/or a set of instructions.

At least one memory (204) may be connected to at least one processor (202), and may store various forms of data, signals, messages, information, programs, code, indications, and/or instructions. At least one memory (204) may be configured as a read only memory (ROM), a random access memory (RAM), an erasable programmable read only memory (EPROM), a flash memory, a hard drive, a register, a cache memory, a computer-readable storage medium, and/or a combination thereof. At least one memory (204) may be located inside and/or outside at least one processor (202). In addition, at least one memory (204) may be connected to at least one processor (202) through various technologies such as wired or wireless connection.

At least one transceiver (206) may transmit user data, control information, wireless signals/channels, and the like mentioned in the methods and/or operation flowcharts of this document to at least one other device. At least one transceiver (206) may receive user data, control information, wireless signals/channels, and the like mentioned in the descriptions, functions, procedures, proposals, methods, and/or operation flowcharts disclosed in this document from at least one other device. For example, at least one transceiver (206) may be connected to at least one processor (202), and may transmit/receive wireless signals. For example, at least one processor (202) may control at least one transceiver (206) to transmit user data, control information, or a wireless signal to at least one other device. In addition, at least one processor (202) may control at least one transceiver (206) to receive user data, control information, or a wireless signal from at least one other device. In addition, at least one transceiver (206) may be connected to at least one antenna (208), and at least one transceiver (206) may be configured to transmit/receive user data, control information, wireless signals/channels, and the like mentioned in the descriptions, functions, procedures, proposals, methods, and/or operation flowcharts disclosed in this document through at least one antenna (208). In this document, the at least one antenna may be a plurality of physical antennas, or a plurality of logical antennas (e.g., antenna ports). At least one transceiver (206) may convert received wireless signals/channels and the like from an RF band signal into a baseband signal, in order to process the received user data, control information, wireless signals/channels, and the like by using at least one processor (202). At least one transceiver (206) may convert user data, control information, wireless signals/channels, and the like processed by using at least one processor (202) from a baseband signal into an RF band signal. For this purpose, at least one transceiver (206) may include an (analog) oscillator and/or a filter.

Components of the wireless device described with reference to FIG. 2 may be referred to by other terms from a functional point of view. For example, the processor (202) may be referred to as a controller, the transceiver (206) may be referred to as a communication unit, and the memory (204) may be referred to as a storage unit. In some cases, the communication unit may be used to mean including at least some of the processor (202) and the transceiver (206).

The structure of the wireless device described with reference to FIG. 2 may be understood as a structure of at least some of various devices. For example, the structure of the wireless device illustrated in FIG. 2 may be at least some of various devices described with reference to FIG. 1 (e.g., the robot (100a), the vehicles (100b-1, 100b-2), the XR device (100c), the hand-held device (100d), the home appliance (100e), the IoT device (100f), the AI device/server (100g)). Furthermore, according to various embodiments, in addition to the components illustrated in FIG. 2, the apparatus may further include other components.

For example, the apparatus may be a hand-held device such as a smartphone, a smart pad, a wearable device (e.g., a smart watch, smart glasses), or a portable computer (e.g., a laptop). In this case, the apparatus may further include at least one of a power supply unit for supplying power and including a wired/wireless charging circuit, a battery, and the like, an interface unit including at least one port (e.g., an audio input/output port, a video input/output port) for connection with another apparatus, and an input/output unit for inputting and outputting image information/signals, audio information/signals, data, and/or information input from a user.

For example, the apparatus may be a mobile apparatus such as a mobile robot, a vehicle, a train, an aerial vehicle (AV), whether manned or unmanned, or a ship. In this case, the apparatus may further include at least one of a driving unit including at least one of an engine, a motor, a power train, wheels, a brake, and a steering device of the apparatus, a power supply unit for supplying power and including a wired/wireless charging circuit, a battery, and the like, a sensor unit for sensing state information of the apparatus or around the apparatus, environmental information, and user information, an autonomous driving unit for performing functions such as route maintenance, speed control, and destination configuration, and a location measurement unit for obtaining location information of a moving body through a global positioning system (GPS) and various sensors.

For example, the apparatus may be an XR device such as an HMD, a HUD provided in a vehicle, a television, a smartphone, a computer, a wearable device, a home appliance, digital signage, a vehicle, or a robot. In this case, the

apparatus may further include at least one of a power supply unit for supplying power and including a wired/wireless charging circuit, a battery, and the like, an input/output unit for obtaining control information, data, and the like from the outside and outputting a generated XR object, and a sensor unit for sensing state information of the apparatus or around the apparatus, environmental information, and user information.

For example, the apparatus may be a robot classifiable as an industrial, medical, household, or military robot according to a purpose of use or a field. In this case, the apparatus may further include at least one of a sensor unit for sensing state information of the apparatus or around the apparatus, environmental information, and user information, and a driving unit for performing various physical operations such as moving robot joints.

For example, the apparatus may be an AI device such as a TV, a projector, a smartphone, a PC, a laptop, a user equipment (UE) for digital broadcasting, a tablet PC, a wearable device, a set-top box (STB), a radio, a washing machine, a refrigerator, digital signage, a robot, or a vehicle. In this case, the apparatus may further include at least one of an input unit for obtaining various types of data from the outside, an output unit for generating an output related to sight, hearing, or touch, a sensor unit for sensing state information of the apparatus or around the apparatus, environmental information, and user information, and a training unit for training a model composed of an artificial neural network by using training data.

The structure of the wireless device illustrated in FIG. 2 may be understood as a part of a radio access network (RAN) node (e.g., a base station, a distributed unit (DU), a radio unit (RU), a remote radio head (RRH)). For example, the apparatus illustrated in FIG. 2 may be a RAN node. In this case, the apparatus may further include a wired transceiver for front haul and/or back haul communication. However, when the front haul and/or back haul communication is based on wireless communication, the at least one transceiver (206) illustrated in FIG. 2 may be used for the front haul and/or back haul communication, and a wired transceiver may not be included.

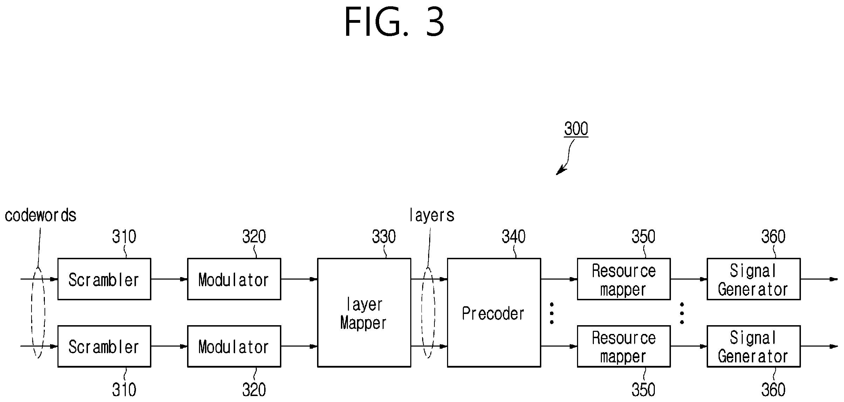

FIG. 3 shows a method for processing a transmission signal to which the present disclosure is applied. For example, the transmission signal may be processed by a signal processing circuit. At this time, the signal processing circuit (300) may include a scrambler (310), a modulator (320), a layer mapper (330), a precoder (340), a resource mapper (350), and a signal generator (360). At this time, for example, the operations/functions of FIG. 3 may be performed in the processor (202) and/or the transceiver (206) of FIG. 2. In addition, for example, the hardware elements of FIG. 3 may be implemented in the processor (202) and/or the transceiver (206) of FIG. 2. For example, blocks 310 to 360 may be implemented in the processor (202) of FIG. 2. In addition, blocks 310 to 350 may be implemented in the processor (202) of FIG. 2, and block 360 may be implemented in the transceiver (206) of FIG. 2, but the present disclosure is not limited to the above-described embodiment.

A codeword may be converted into a wireless signal through the signal processing circuit (300) of FIG. 3. Here, the codeword is an encoded bit sequence of an information block. The information block may include a transport block (e.g., an uplink shared channel (UL-SCH) transport block, a downlink shared channel (DL-SCH) transport block). The wireless signal may be transmitted through various physical channels (e.g., a physical uplink shared channel (PUSCH), a physical downlink shared channel (PDSCH)). Specifically, the codeword may be converted by the scrambler (310) into a scrambled bit sequence. A scrambling sequence used for scrambling is generated based on an initialization value, and the initialization value may include identification information of the wireless device and the like. The scrambled bit sequence may be modulated by the modulator (320) into a modulated symbol sequence. A modulation scheme may include pi/2-binary phase shift keying (pi/2-BPSK), m-phase shift keying (m-PSK), m-quadrature amplitude modulation (m-QAM), and the like.

The complex modulated symbol sequence may be mapped by the layer mapper (330) to at least one transmission layer. Modulation symbols of each transmission layer may be mapped by the precoder (340) to corresponding antenna port(s). An output z of the precoder (340) may be obtained by multiplying an output y of the layer mapper (330) by an N×M precoding matrix W. Here, N is the number of antenna ports, and M is the number of transmission layers. Here, the precoder (340) may perform precoding after performing transform precoding (e.g., discrete Fourier transform (DFT)) on complex modulation symbols. In addition, the precoder (340) may perform precoding without performing transform precoding.

The resource mapper (350) may map modulation symbols of each antenna port to time-frequency resources. The time-frequency resources may include a plurality of symbols (e.g., cyclic prefix-orthogonal frequency division multiple access (CP-OFDMA) symbols, DFT-spread-OFDMA (DFT-s-OFDMA) symbols) in a time domain, and may include a plurality of subcarriers in a frequency domain. The signal generator (360) generates a wireless signal from the mapped modulation symbols, and the generated wireless signal may be transmitted to another device through each antenna. For this purpose, the signal generator (360) may include an inverse fast Fourier transform (IFFT) module, a cyclic prefix (CP) inserter, a digital-to-analog converter (DAC), a frequency uplink converter, and the like.

A signal processing procedure for a reception signal in a wireless device may be configured as a reverse of the signal processing procedure (310 to 360) of FIG. 3. For example, the wireless device (e.g., 200 of FIG. 2) may receive a wireless signal from the outside through an antenna port/transceiver. The received wireless signal may be converted into a baseband signal through a signal restorer. For this purpose, the signal restorer may include a frequency downlink converter, an analog-to-digital converter (ADC), a CP remover, and a fast Fourier transform (FFT) module. Thereafter, the

baseband signal may be restored into a codeword through a resource demapper procedure, a postcoding procedure, a demodulation procedure, and a descrambling procedure. The codeword may be restored into an original information block through decoding. Accordingly, a signal processing circuit (not shown) for a reception signal may include a signal restorer, a resource demapper, a postcoder, a demodulator, a descrambler, and a decoder.

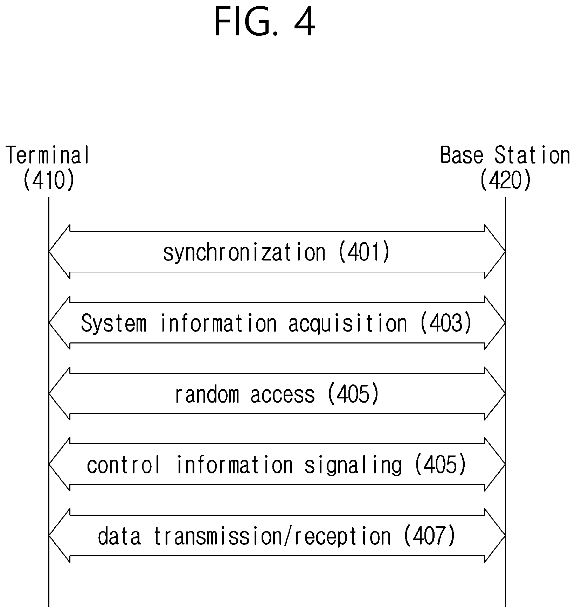

FIG. 4 shows a communication procedure between a UE and a base station applicable to the present disclosure. FIG. 4 exemplifies operations in which a UE (410) and a base station (420) transmit and/or receive data and operations performed before the operations.

Referring to FIG. 4, in step 401, the UE (410) and the base station (420) perform synchronization. For example, the UE (410) performs an initial cell search operation. Specifically, the UE (410) may detect at least one synchronization signal transmitted by the base station (420) according to a pre-configured rule. Here, the synchronization signal may include a plurality of synchronization signals (e.g., a primary synchronization signal, a secondary synchronization signal) classified according to a structure or a purpose. Through this, the UE (410) may identify a boundary of a frame, a subframe, a slot, and/or a symbol of the base station (420), and may obtain information related to the base station (420) (e.g., cell identifier).

In step 403, the UE (410) obtains system information transmitted by the base station (420). The system information is information related to attributes, characteristics, and/or capabilities of the base station (420) required to access the base station (420) and use a service, and may be classified according to content (e.g., whether the information is essential for access), a transmission structure (e.g., a channel used, whether the information is provided on-demand), and the like, and may be classified into, for example, a master information block (MIB) and a system information block (SIB). As necessary, before receiving the system information, the UE (410) may transmit a signal requesting the system information. However, requesting and providing the system information may be performed after a random access procedure to be described later.

In step 405, the UE (410) and the base station (420) perform a random access procedure. The UE (410) may transmit and/or receive at least one message (e.g., a random access preamble, a random access response (RAR) message) for the random access procedure based on information related to a random access channel of the base station (420) obtained through system information (e.g., a channel position, a channel structure, a structure of a supported preamble). For example, the UE (410) may transmit a preamble (e.g., MSG1) through the random access channel, receive an RAR message (e.g., MSG2), transmit, to the base station (420), a message (e.g., MSG3) including information related to the UE (410) (e.g., identification information) by using scheduling information included in the RAR message, and receive a message (e.g., MSG4) for contention resolution and/or connection establishment. As another example, MSG1 and MSG3 may be transmitted and received as one message, or MSG2 and MSG4 may be transmitted and received as one message.

In step 407, the UE (410) and the base station (420) perform signaling of control information. Here, the control information may be defined in various layers such as a layer controlling a connection (e.g., a radio resource control (RRC) layer), a layer processing mapping between a logical channel and a transport channel (e.g., a medium access control (MAC) layer), and a layer processing a physical channel (e.g., a physical (PHY) layer). For example, the UE (410) and the base station (420) may perform at least one of signaling for establishing a connection, signaling for determining a configuration related to communication, and signaling for indicating an allocated resource.

In step 409, the UE (410) and the base station (420) transmit and/or receive data. For example, the UE (410) and the base station (420) may process, transmit, and/or receive data based on signaling of control information. For example, when transmitting data, the UE (410) or the base station (420) may perform at least one of channel encoding, rate matching, scrambling, constellation mapping, layer mapping, waveform modulation, antenna mapping, and resource mapping for information bits. Conversely, when receiving data, the UE (410) or the base station (420) may perform at least one of signal extraction from a resource, waveform demodulation for each antenna, signal arrangement considering layer mapping, constellation demapping, descrambling, and channel decoding.

## 6G communication system and core implementation technologies of a 6G system

A 5G system defines various operating bands within frequency range 1 (FR1) including 410 MHz to 7125 MHz and frequency range 2 (FR2) including 24,250 MHz to 71,000 MHz. Thereafter, various frequencies are being discussed as operating bands of a 6G system, and use of frequencies higher than those of the 5G system is also being considered for a wider bandwidth and a higher transmission rate. As one of the frequencies, use of a terahertz (THz) frequency band including about 100 GHz to 10 THz is being discussed. The THz frequency band is a band having both penetrability of radio waves and rectilinearity of light waves, and communication using the THz frequency band is also expected to serve as a transitional role from conventional radio wave-centered communication to light wave-based communication.

A 6G (wireless communication) system has purposes of i) a very high data rate per device, ii) a very large number of connected devices, iii) global connectivity, iv) a very low latency, v) reducing energy consumption of battery-free IoT devices, vi) an ultra-reliable connection, and vii) connected intelligence having machine learning capability. A vision of the

6G system may have four aspects such as "intelligent connectivity", "deep connectivity", "holographic connectivity", and "ubiquitous connectivity", and the 6G system may satisfy requirements such as in [Table 1] below.

[Table 1]

| | |
|---|---|
| Per device peak data rate | 1 Tbps |
| E2E latency | 1 ms |
| Maximum spectral efficiency | 100 bps/Hz |
| Mobility support | up to 1000 km/hr |
| Satellite integration | Fully |
| AI | Fully |
| Autonomous vehicle | Fully |
| XR | Fully |
| Haptic Communication | Fully |

At this time, the 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

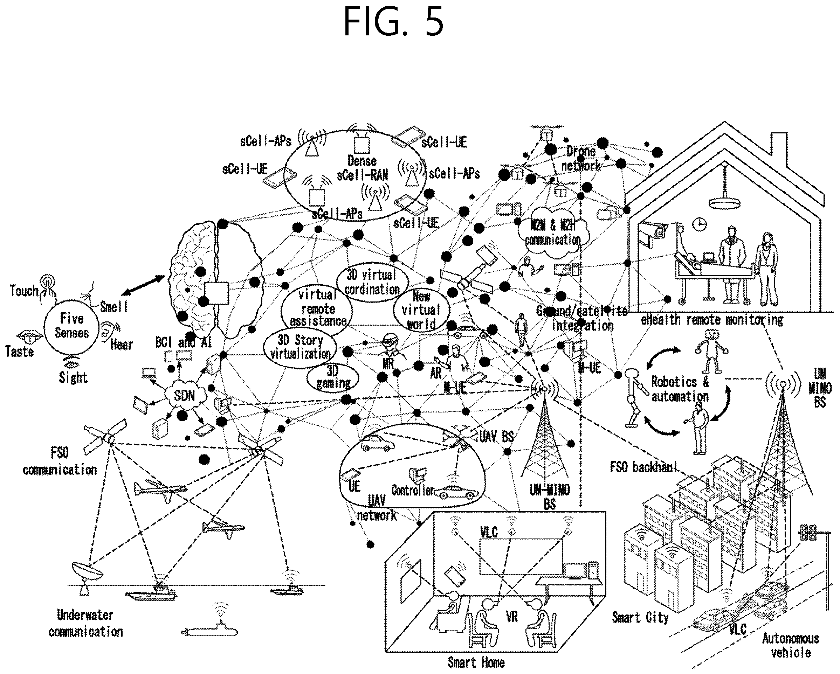

FIG. 5 shows an example of a communication structure capable of being provided in a 6G system applicable to the present disclosure. Referring to FIG. 5, the 6G system is expected to have simultaneous wireless communication connectivity 50 times higher than that of a 5G wireless communication system. Ultra-reliable and low latency communication (URLLC), which is a key feature of 5G, is expected to become a more important technology in 6G communication by providing end-to-end latency of less than 1 ms. At this time, the 6G system will have much better volumetric spectrum efficiency unlike area spectrum efficiency frequently used. The 6G system may provide advanced battery technology for a very long battery life and energy harvesting, so that mobile devices in the 6G system may not need to be separately charged.

As core implementation technologies of the 6G system, technologies such as artificial intelligence (AI), terahertz (THz) communication, optical wireless technology, free-space optics (FSO) backhaul networks, massive multiple input multiple output (MIMO) technology, blockchain, 3D networking, quantum communication, unmanned aerial vehicles, cell-free communication, wireless information and energy transfer (WIET), integration of sensing and communication, integration of access backhaul networks, hologram beamforming, big data analysis, and a large intelligent surface (LIS) may be adopted.

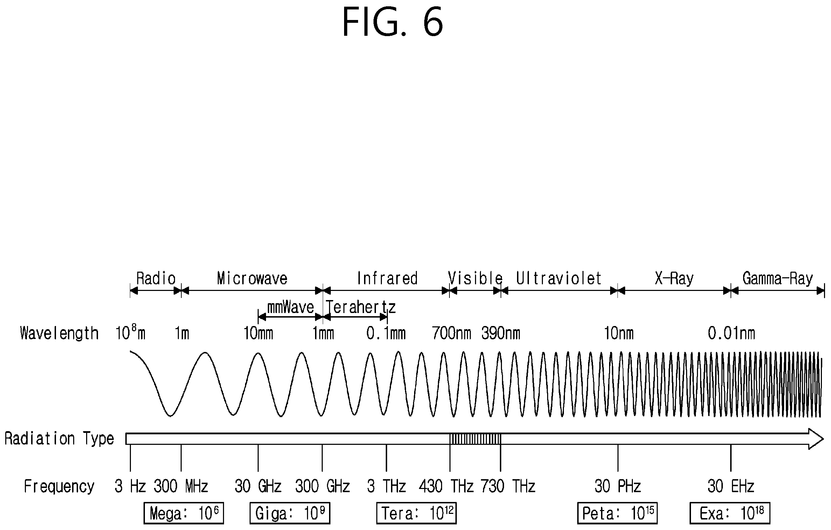

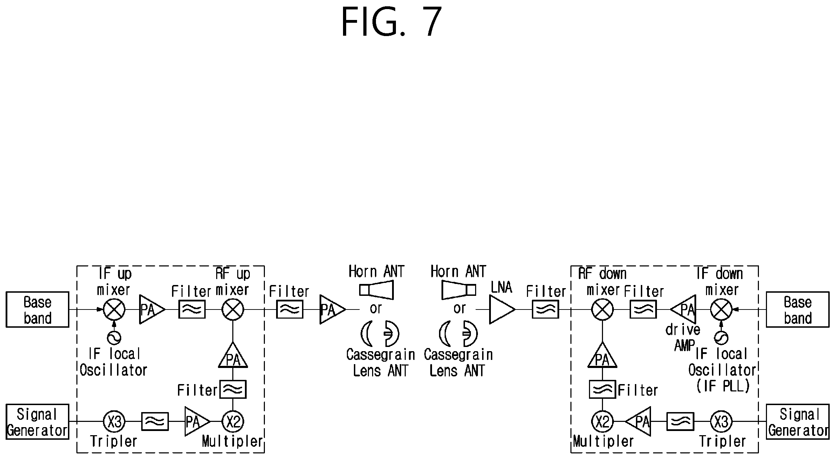

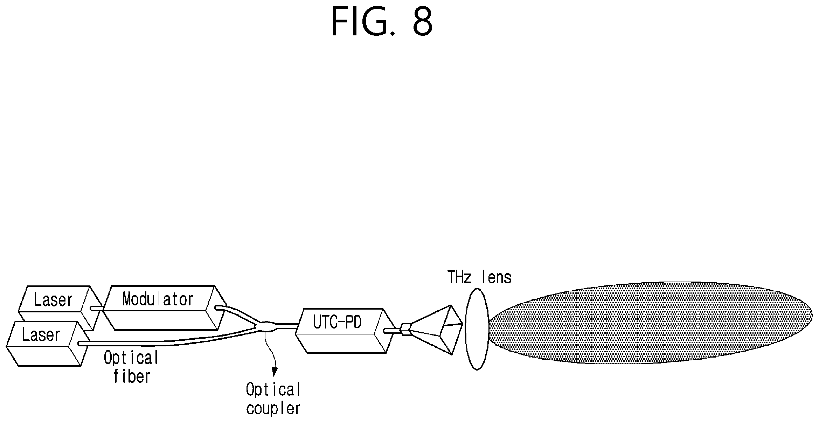

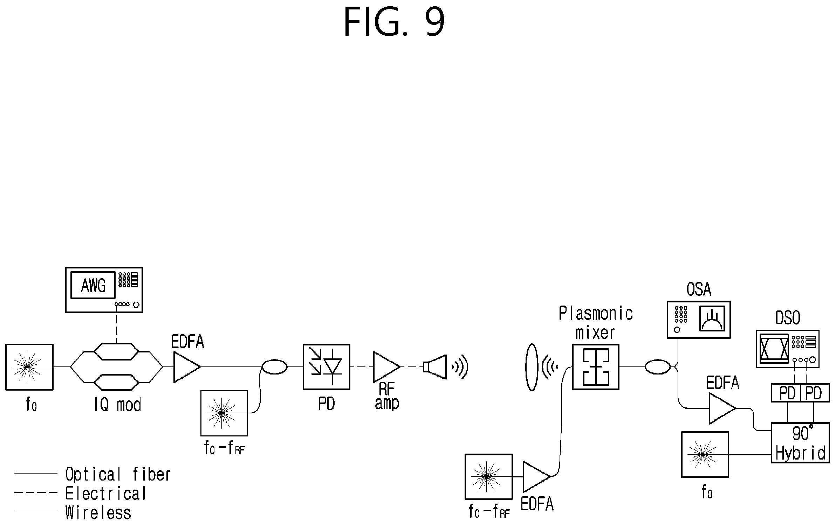

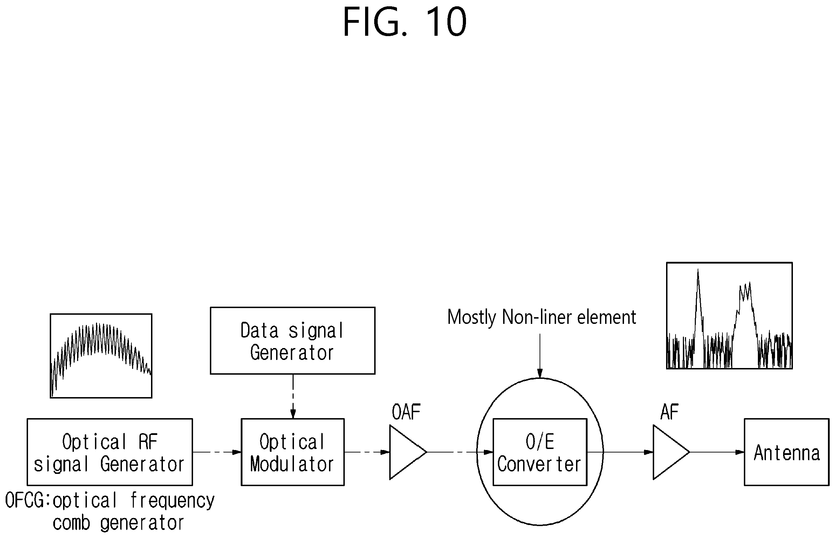

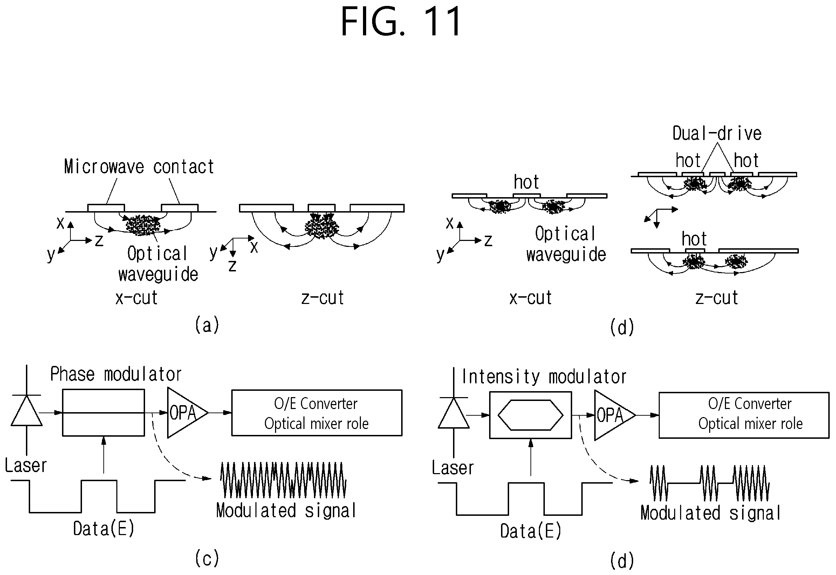

For example, THz communication is communication using a spectrum in a frequency band between 0.1 THz and 10 THz having corresponding wavelengths in a range of 0.03 mm to 3 mm, as shown in FIG. 6, and may be implemented by using circuit elements having a structure as shown in FIG. 7. In addition, optical wireless technology is technology for generating and modulating a THz signal by using an optical element, and may be implemented based on an apparatus having a structure as shown in FIG. 8, FIG. 9, FIG. 10, and FIG. 11.

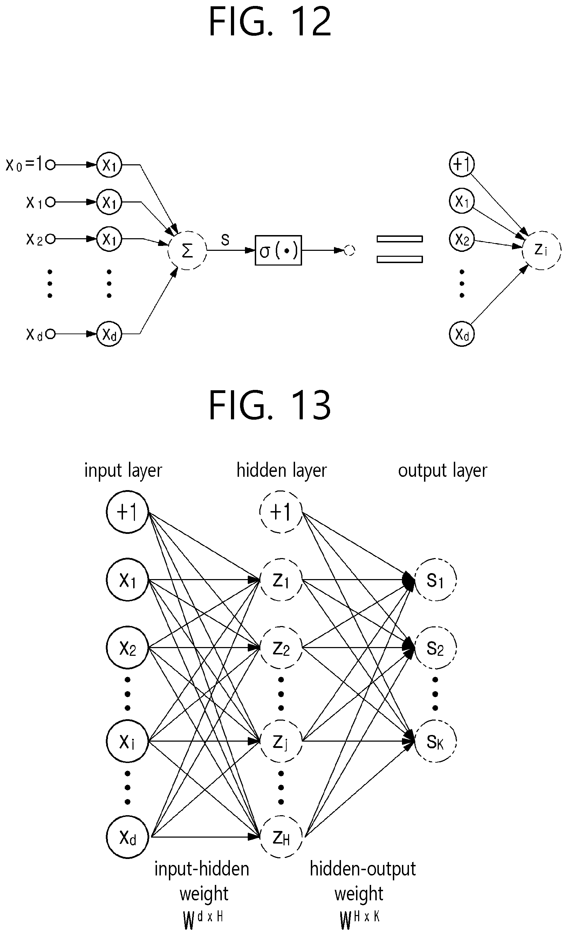

In addition, AI may be implemented based on various models such as a neural network and machine learning. For example, an AI model having a neural network structure may be based on a structure of a perceptron such as FIG. 12. Referring to FIG. 12, an artificial neural network may be configured by a plurality of perceptrons. According to the structure of the perceptron, when an input vector $x=\{x_1, x_2, ..., x_d\}$ is input, weights $\{w_1, w_2, ..., w_d\}$ are multiplied by respective components, all resulting values are summed, and then an activation function $\sigma(\cdot)$ is applied. When a simple perceptron structure shown in FIG. 12 is expanded into a huge artificial neural network structure, an input vector may be applied to different multi-dimensional perceptrons. When perceptrons are stacked, a neural network having an input layer, a hidden layer, and an output layer as shown in FIG. 13 may be configured.

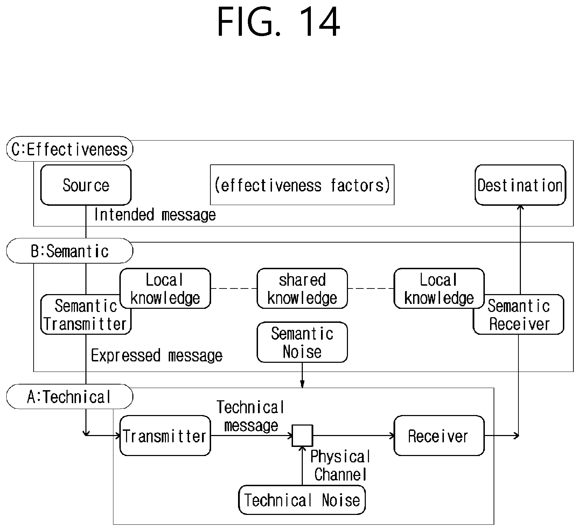

FIG. 14 shows a communication model divided into three levels applicable to the present disclosure. Referring to FIG. 14, the communication model may be described by being divided into three levels. A first level may be a problem of whether symbols for communication are accurately transmitted from a technical aspect, and Shannon’s information theory may be considered as a theory focusing on the technical aspect. On the other hand, a second level may be a problem of how accurately transmitted symbols deliver correct meanings from a semantic aspect, and a third level may be a problem of how effectively a received meaning affects operation in a correct manner from an effectiveness aspect.

One of various goals of 6G communication may be to provide a service capable of interconnecting humans and machines. As one of next-generation wireless communication paradigms for this purpose, semantic communication based on a "meaning delivery" concept may be considered. For example, existing communication may be a scheme in

which a receiver, e.g., a destination, decodes an encoded signal received from a transmitter, e.g., a source, into an existing signal without error. On the other hand, semantic communication may be a scheme focusing on a meaning intended to be delivered through a signal in a manner in which people exchange information through a 'meaning' of a word during communication.

For example, semantic communication may be a communication scheme based on that a concept related to a message transmitted by a source is correctly interpreted at a destination. For example, the source may generate a semantic representation based on raw data and transmit the semantic representation to the destination. The destination may perform communication in a manner of whether a task operation intended by the source is well performed using the received semantic representation, rather than for a purpose of reducing a reconstruction error. For example, in semantic communication, communication may be performed based on whether a task operation is well performed at the destination, e.g., whether interpretation is well performed, rather than for a purpose of reducing a reconstruction error.

As a specific example, a source may generate a semantic representation and transmit the semantic representation to a destination. Here, the source needs to generate the semantic representation in consideration of a task operation performed at the destination. For example, the source may operate based on a task-oriented semantic communication system enabling the semantic representation to be generated based on whether the task operation is well performed at the destination. In consideration of the above, it is necessary to preserve task-relevant information while introducing invariance useful for a task performed at the destination. For example, in order to perform semantic communication in consideration of the above, a new layer may be added as a semantic layer managing overall operations for a semantic representation and a message. For example, the semantic layer may be located at each of a source and a destination by reflecting a task-oriented semantic communication system. In order to perform communication between semantic layers located at each of the source and the destination, a protocol, which is a rule between layers, and a series of operation procedures need to be determined.

For example, a method for performing attention map-based error detection in semantic communication will be described below. An attention map may be generated based on an attention technique. The attention technique may be applied to an existing neural machine translation (NMT) field. Specifically, when the attention technique is applied to the NMT field, a decoder may refer again to an input sequence of an encoder at every step of predicting an output word. Here, the decoder may perform prediction by referring to an input sequence having high relevance to an output prediction word among input sequences. For example, in a process of performing output word prediction, the decoder may not refer to input sequences with the same weight, but may refer by focusing attention on an input sequence having high relevance to a prediction word, thereby increasing prediction accuracy. In consideration of the above, the technique may be an attention technique because the technique uses an attention-focused portion, but may not be limited to the name. However, hereinafter, for convenience of description, the technique is referred to as an attention technique.

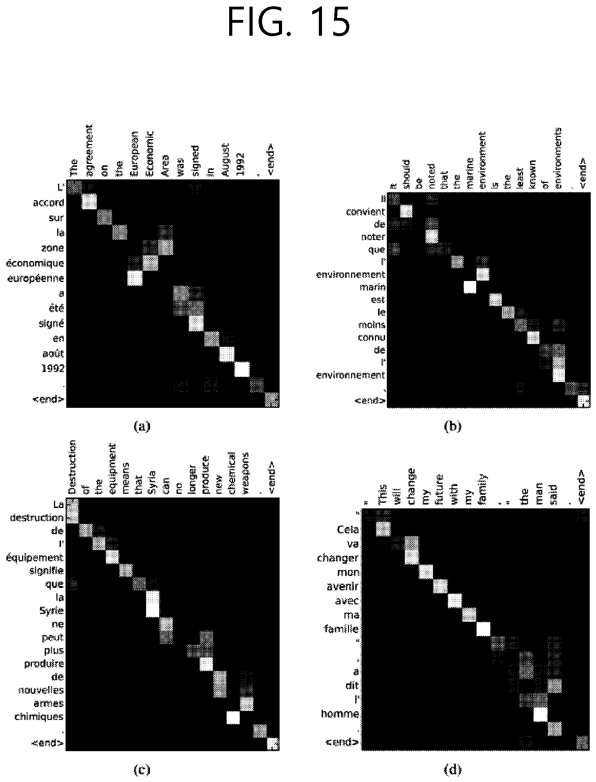

For example, FIG. 15 shows a method for translating English, which is an input word, into French, which is an output word, based on an attention technique applicable to the present disclosure. Referring to FIG. 15, the attention technique may be applied in sequence modelling between English, which is the input word, and French, which is the output word. Here, the sequence modelling between English, which is the input word, and French, which is the output word, may include a weight value represented by a correlation matrix. For example, in FIG. 15, the closer a color of a pixel is to white, the higher relevance between words may be. Referring to FIG. 15, even when an order in which an English sentence is written and an order in which a French sentence is written are different, a high weight may appear for a portion intended to be translated into a word having relevance regardless of position, and prediction accuracy may be increased accordingly.

Here, for example, the attention technique may be applied to network architectures other than neural machine translation based on a transformer model. Specifically, using a transformer model structure, the attention technique may be applied to all important portions regardless of an input length. Accordingly, attention-based processing may be performed for text, images, graphs, and various other data modalities, but may not be limited to a specific form.

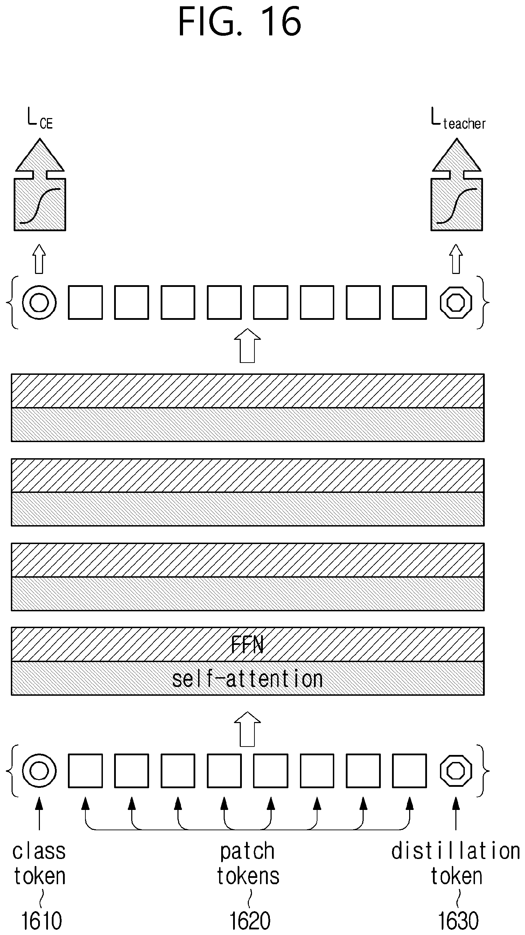

FIG. 16 shows a method for applying an attention technique using a transformer model when a data modality applicable to the present disclosure is an image. Referring to FIG. 16, a vision transformer may be applied as a transformer model for image processing. As a more specific example, the vision transformer may be data-efficient image transformers (DeiT), but this is only one example and may not be limited thereto. Referring to FIG. 16, as input values of DeiT as a vision transformer model, a class token for a direction of matching a true label of an input image, tokens obtained by tokenizing the input image in units of patches, and a distillation token responsible for learning knowledge of a teacher model by reducing an error from an inference value of the teacher model may be used. Here, the class token and the distillation token are randomly initialized before being applied to a transformer structure, and may be changed to optimized values while passing through multiple layers.

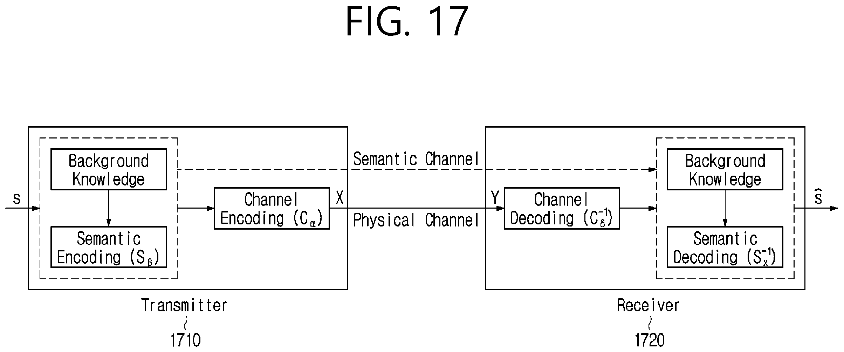

As described above, the attention technique may be a technique for processing data by focusing on a portion having high relevance to an output predicted from input data. Here, for example, FIG. 17 shows a method for performing semantic communication applicable to the present disclosure. Referring to FIG. 17, a transmitter 1710 may perform semantic encoding and channel encoding for input data, sentence s, and transmit the input data to a receiver 1720. The receiver 1720 may perform channel decoding and semantic encoding for data received through a channel to obtain

reconstructed data $\hat{s}$. Here, semantic encoding and semantic decoding may be performed through the above-described transformer model-based encoder and transformer model-based decoder from a semantic communication perspective. For example, when semantic communication is performed based on FIG. 17, a loss function may be as shown in Equation 1 below. Referring to Equation 1, the loss function may include a part for cross entropy and a part for mutual information. Here, the cross entropy part may be cross entropy between input data s and reconstructed data $\hat{s}$, which may be as shown in Equation 2. The cross entropy part may be a part for determining whether input data s is well restored to become reconstructed data $\hat{s}$. For example, in Equation 2, $q(_{w_l})$ may be an actual probability for an l-th word $w_l$ in a sentence s as input data, and $p(_{w_l})$ may be a predicted probability for an l-th word $w_l$; in $\hat{s}$ as reconstructed data. For example, the cross entropy part may indicate a difference in probability between the input data and the reconstructed data.

[Equation 1]

$$\mathcal{L}_{total} = \mathcal{L}_{CE}(s, \hat{s}; \alpha, \beta, \chi, \delta) - \lambda \mathcal{L}_{MI}(x, y; T, \alpha, \beta)$$

[Equation 2]

$$\mathcal{L}_{CE}(s, \hat{s}; \alpha, \beta, \chi, \delta) = -\sum_{l=1} q(w_l) \log\big(p(w_l)\big) + \big(1 - q(w_l)\big) \log\big(1 - p(w_l)\big)$$

Here, the above-described equations may be an overall comparison between input data and reconstructed data. However, in semantic communication, from a perspective of performing a downstream task, a portion corresponding to an intention intended to be delivered by a source may be important. Accordingly, it is necessary to consider a reconstruction operation for a portion intended to be delivered by the source in input data, not the entire data. In consideration of the above, a scheme for using an attention map obtained through an attention technique will be described below.

For example, when an attention technique is applied from a semantic communication perspective, a source may generate and transmit a semantic representation (SR) using the attention technique in order to express what an intention intended to be delivered is. A destination may check, based on the transmitted semantic representation, which portion in original data is more focused on using the attention technique, and may check whether to interpret a meaning intended to be delivered by the source through this. For example, in semantic communication, the attention technique may enable error detection to be performed only for a portion including a meaning intended to be delivered among entire data, rather than performing error detection based on reconstruction for the entire data, and a scheme therefor may be required.

Here, conventionally, a system has been configured by using a transformer model structure as it is, and learning for reconstructing input data has been performed based thereon, and a trained model has been used for inference. In addition, conventionally, error detection for reconstruction of input data of a source has not been performed at a destination by using an attention map (attention matrix), which is a result of an attention technique used in each layer configuring the transformer model. For example, without focusing on an attention map, which is a result of an attention technique used in each layer configuring the transformer model, only error detection for input data reconstruction, which is a result to which the attention technique is applied, may be performed. However, as described above, semantic communication may be communication in a scheme of delivering a meaning based on semantic-level reconstructed data. Accordingly, semantic error detection that performs error detection only for a portion containing a meaning intended to be delivered in entire data may be required, and a method for performing this based on an attention technique will be described below.

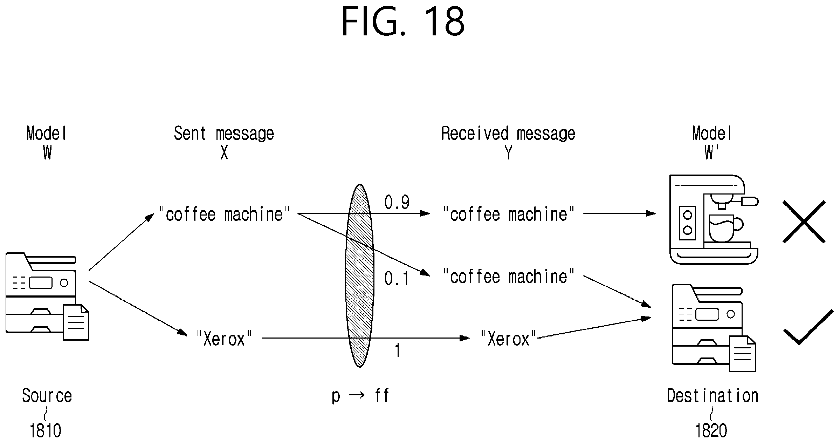

For example, FIG. 18 shows a semantic error applicable to the present disclosure. Referring to FIG. 18, when a message is transmitted through a communication channel including noise based on semantic communication, the message received at a destination may include an error due to channel noise. Here, the error may occur at a technical level as level A described above in FIG. 14 or at a semantic level as level B described above. Specifically, the technical level may have syntactic preservation of a transmitted message and a received message as a final purpose. For example, the error may be determined based on whether the received message can be preserved in the same form as the transmitted message. Accordingly, the difference may be referred to as a syntactic difference, but may not be limited thereto.

On the other hand, the semantic level may not have syntactic preservation of the transmitted message and the received message as a purpose, but may have, as a final purpose, similarly reasoning semantics included in the transmitted message and semantics included in the received message. For example, the semantic level may determine a difference between the transmitted message and the received message from a destination operation perspective reflecting an intention of a source transmitting the message, and may determine an error through this. Accordingly, the semantic error may be referred to as a semantic difference between the transmitted message and the received message, but may not be limited thereto.

As a specific example, referring to FIG. 18, a source 1810 may instruct a destination 1820 with a word "copy machine" through voice. Here, a pronunciation of "p" may be similar to a pronunciation of "ff". Accordingly, the destination 1820 instructed with the message through voice may misrecognize "copy machine" as "coffee machine". Here, considering syntactic preservation, since some spellings of the transmitted message and the received message are different, it may be determined that the error is not large. However, considering the semantic level, if "copy machine" is misinterpreted as "coffee machine", it may be a significant error because it is interpreted as a different meaning. In consideration of the above, the source 1810 may transmit additional information for preventing the destination 1820 from misinterpreting at the semantic level. For example, in FIG. 18, the source 1810 may transmit "xerox" to the destination 1820 as additional information. As another example, the source 1810 may receive feedback including information misinterpreted by the destination 1820, and transmit "xerox" as additional information. Here, even when the destination 1820 misinterprets "copy machine" as "coffee machine", the destination 1820 may recognize that a meaning intended to be delivered by the source 1810 is "copy machine" using the word "xerox". Here, the above-described operation may be semantic error correction, and the destination 1820 may perform an operation intended by the source through the semantic error correction operation.

As described above, a semantic mismatch caused by a semantic error may occur between a source 1810 and a destination 1820 performing semantic communication. Accordingly, in order to guarantee reliability in semantic communication, the destination 1820 needs to check the semantic mismatch based on semantic error detection, and when a semantic error is detected, accurate semantic information reflecting an intention of the source 1810 may be obtained through a semantic error correction process, and a method for performing a semantic error correction operation based thereon will be described below.

For example, a method and procedure for performing error correction after error detection based on an attention map in a semantic communication-based system will be described below. Hereinafter, a case in which bidirectional communication is performed at a semantic level based on level B of FIG. 14 may be described, but the present disclosure is not limited thereto.

A task-based operation may be performed in a semantic communication system. Specifically, a source may generate a semantic representation based on an intention intended to be delivered and transmit the semantic representation to a destination. The destination may reconstruct the semantic representation received at a semantic level and then use reconstructed data as an input to a plurality of downstream tasks located at the destination to obtain an output of each task. Here, semantic-level reconstruction may be reconstruction for obtaining, at the destination, an output corresponding to an operation intended by the source by normally performing, or performing according to an intention, an operation of a downstream task, unlike existing reconstruction for perfectly restoring input data.

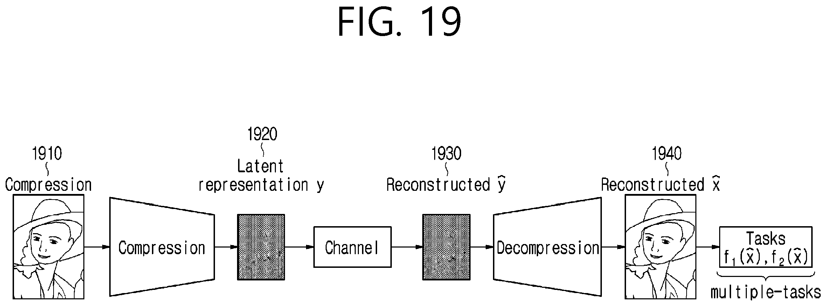

For example, FIG. 19 shows a method for operating a plurality of downstream tasks located at a destination when a modality of input data applicable to the present disclosure is an image. Referring to FIG. 19, a source and a destination may possess a labeled dataset required for learning of multi-tasks. For example, the source may be an entity transmitting data, such as a UE, a base station, or another device. In addition, the destination may be an entity receiving data and performing a task according to a purpose, such as a UE, a base station, or another device. For example, the source and the destination may each be a subject performing communication, and may not be limited to a specific type of device. Hereinafter, for convenience of description, description will be provided based on the source and the destination. For example, the source and the destination may possess a labeled dataset required for learning of tasks, and the destination may perform multi-tasks. Here, each of the multi-tasks may be an operation based on a different purpose, and semantic-level reconstructed data transmitted from the source as a semantic representation may be transmitted as an input to each of the multi-tasks at the destination. For example, each of the multi-tasks may operate according to a different purpose based on the input.

As a specific example, a source may encode data provided as an input, image x, 1910, to generate a semantic representation, latent representation y, 1920. Here, the semantic representation 1920 may be transmitted to a destination through a channel. The destination may decode a received semantic representation 1930 to obtain semantic-level reconstructed data $\hat{x}$, reconstruction data $\hat{x}$, 1940. Thereafter, the destination may use $\hat{x}$ as an input to each of multi-tasks to perform an operation according to a purpose of each task and check an output.

Hereinafter, an inference operation may be performed based on an encoder and decoder to which an attention technique is applied and for which learning is completed, and multi-tasks may be performed at a destination. Here, the destination may perform error detection on semantic-level reconstructed data, and hereinafter, an operation in which the source and the destination perform error correction after error detection will be described. For example, description will be provided below based on structures of the source and the destination, respectively.

For example, a semantic-level reconstructed error may not be a reconstructed error for entire data intended to be delivered by a source, but may be a reconstructed error for a data area intended to be focused on in relation to a meaning intended to be delivered. Accordingly, when a semantic-level reconstructed error is measured, a reconstructed error for a portion other than an area intended to be focused on may not be considered. For example, the semantic-level reconstructed error may be calculated as shown in Equation 3 below. Specifically, the semantic-level reconstructed

error may be determined based on a ratio occupied by an area in which an element of a bitwise attention map of comparison target data is 1 among areas in which an element of a bitwise attention map based on transmission target data is 1. In Equation 3 below, when an area in which an element of a bitwise attention map based on transmission target data is 1 and an area in which an element of a bitwise attention map of comparison target data is 1 are identical, an error rate may be 0, and the greater a difference, the greater the error rate may increase.

Error rate (in semantic level) = 100% - (ratio occupied by an area in which an element of a bitwise attention map of comparison target data is 1 among areas in which an element of a bitwise attention map based on transmission target data is 1) [Equation 3]

For example, a semantic error detection operation will be described below, but this is only one example and the present disclosure is not limited thereto. Specifically, a source may configure a bitwise attention map based on a configured threshold and transmit the bitwise attention map to a destination. The destination may perform error detection through the bitwise attention map transmitted from the source.

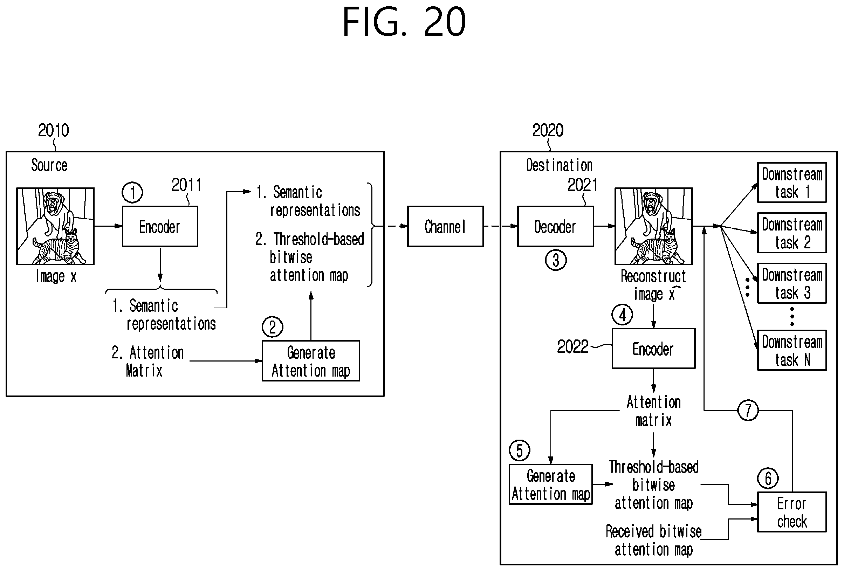

As a specific example, FIG. 20 shows a method for performing error detection applicable to the present disclosure. For example, FIG. 20 describes a case in which a modality of input data is an image, but this is only one example for convenience of description and the present disclosure is not limited thereto. In addition, FIG. 20 describes unidirectional communication from a source 2010 to a destination 2020, but this is only for convenience of description, and the same may be applied to bidirectional communication.

Referring to FIG. 20, the source 2010 may include an encoder 2011 for which learning is completed based on an attention technique. When input data is provided to the encoder 2011, the encoder 2011 may generate a semantic representation and an attention matrix. Here, the semantic representation may include a meaning intended to be delivered based on semantic communication. In addition, the attention matrix may be a matrix generated based on an attention technique. In addition, an attention map may be obtained based on the attention matrix. For example, when the encoder 2011 includes a single layer to which an attention technique is applied, an attention map may be obtained through an attention matrix used in the corresponding layer. On the other hand, when the encoder 2011 includes multiple layers to which an attention technique is applied, an attention map may be obtained in consideration of all attention matrices obtained in each layer to which the attention technique is applied.

As a specific example, when an attention technique is applied to multiple layers, an attention matrix of each layer may be configured through Equation 4 below based on a transformer model. Referring to Equation 4, an attention matrix $A_{ij}$ may be obtained for each layer configuring the transformer model. Here, $A_{ij}$ may be an attention matrix indicating how much attention flow occurs from token j of a previous layer to token i of a next layer. For example, $A_{ij}$ may indicate how much attention a j-th token of a previous layer gives to an i-th token of a current layer, and when matrices between two layers are multiplied, total attention flow between the two layers may be obtained. In addition, the transformer model may use a residual connection in order to prevent loss of positional encoding information due to backpropagation during a learning process. For example, positional information, or order information, may be given during a learning process, and in order to prevent loss of the information during a backpropagation process, a residual block based on a residual connection may be used, and accordingly, learning may converge well even when the number of layers increases. A unit matrix of Equation 4 in the transformer model may be an added configuration in consideration of the above-described point.

[Equation 4]

$$attention\ aware\ matrix = A_{ij} + I$$

In addition, for example, when target class information intended to be obtained by a downstream task located at the destination 2020 can be transmitted to the source 2010, the source 2010 may first receive the target class information and then calculate an attention aware matrix for obtaining an attention map. For example, target class information intended to be obtained by a downstream task may be reflected in a process of obtaining an attention map. Here, the attention aware matrix may be obtained by reflecting a gradient value in $A_{ij}$ of Equation 4 as shown in Equation 5 below. For example, in Equation 5, $grad_{ij}$ may be a gradient value related to a target class between token j of a previous layer and token i of a current layer.

[Equation 5]

$$\text{attention aware matrix} = A_{ij} * grad_{ij}$$

In addition, for example, each layer may have multi-head attention applied thereto according to a transformer model structure. Here, an attention head may be a portion to which attention is paid, and a portion to which attention is paid may be different for each attention head. Here, a portion of interest, or a portion focused on, in data may be differently configured according to a scheme in which respective attention heads are fused. For example, a portion focused on in data may be differently configured based on a multi-head attention structure, and a fusion metric considering fusion of attention heads may be applied. For example, the fusion metric may be used to calculate $A_{ij}$, or $A_{ij} * grad_{ij}$, of Equation 4, or Equation 5, described above.

In addition, for example, in an attention technique, it may be necessary not to pay attention to each attention value configuring an attention matrix but to focus on a higher attention value, and for this, a discard ratio may be configured. Specifically, only an attention value having a high value may be used based on the attention matrix, and an attention value having a low value may not be necessary. In consideration of the above-described point, a configuration for discarding an attention value having a low value may be performed, and a discard ratio therefor may be configured. In addition, the configured discard ratio may be applied to $A_{ij}$, or $A_{ij} * grad_{ij}$, of Equation 4, or Equation 5.

Here, an attention aware matrix may be recursively calculated after a configured fusion matrix and discard ratio are applied at a specific layer L, which may be as shown in Equation 5 below. For example, a final attention aware matrix $AttMat_{src}$ may be obtained as a result of calculating attention matrices of all layers through Equation 6.

[Equation 6]

$$Attention_L = (A_L + I)Attention_{L-1}$$

When the final attention aware matrix $AttMat_{src}$ is obtained based on Equation 6, normalization for making a row equal to 1 may be performed for each layer $A_L + I$ in order to maintain total attention flow as 1.

However, Equations 4 to 6 described above are only one example for obtaining an attention matrix, and the present disclosure is not limited thereto. For example, in order to focus on a portion of interest in data, it may be necessary to configure a fusion matrix and a discard ratio, which are as described above. The fusion matrix and the discard ratio may be configured and adjusted based on an operation of a downstream task. As a specific example, in a case of a downstream task operation requiring a large amount of information of input data, the discard ratio may be adjusted to be low, and error detection for more portions may be performed, but this is only one example and the present disclosure is not limited thereto.

When an attention map is obtained based on the above-described operation, a threshold-based bitwise attention map, $AttMap_{src}$, may be generated. For example, the source 2010 may apply $threshold_{att_map}$ to each element of an attention aware matrix $AttMat_{src}$ obtained through the encoder 2011 as shown in Equation 7 below, and accordingly obtain a threshold-based bitwise attention map $AttMap_{src}$. In Equation 7, $AttMat_{src_ij}$ may indicate a component of row i and column j of the attention aware matrix obtained based on the encoder 2011. Accordingly, a threshold-based bitwise attention map finally obtained may be $AttMat_{src_ij}$. For example, $threshold_{att_map}$ may be a reference value for generating an attention map considering a portion for determining whether normality is achieved when data reconstruction is performed at a destination.

[Equation 7]

$$AttMap_{src_ij} = \begin{cases} 0, if\ AttMat_{src_ij} < threshold_{att_map} \\ 1, if\ AttMat_{src_ij} \geq threshold_{att_map} \end{cases}$$

In addition, based on the above-described operation, the source 2010 may finally generate a semantic representation and a threshold-based bitwise attention map and transmit the same to the destination 2020. Thereafter, the destination 2020 may perform a reconstruction operation using the semantic representation. Specifically, a decoder 2021 of the destination 2020 may reconstruct the semantic representation to obtain semantic-level reconstructed data $\hat{x}$. Thereafter, an encoder 2022 located at the destination 2020 may obtain an attention map $AttMat_{dest}$ by using semantic-level reconstructed data $\hat{x}$ as an input. For example, the encoder 2022 of the destination 2020 may obtain an attention map $AttMat_{dest}$, based on a same scheme as the encoder 2011 of the source 2010. For example, the encoder 2022 of the destination 2020 may obtain a threshold-based bitwise attention map $AttMap_{dest}$ based on Equation 7 described above by applying a fusion matrix and a discard ratio based on a same attention matrix calculation scheme as the encoder 2011 of

the source 2010. Thereafter, error detection may be performed by comparing $AttMap_{src}$ transmitted from the source 2010 with $AttMap_{dest}$ generated through the encoder 2021 of the destination 2020. Specifically, attention aware redundancy check (ARC) may be performed by comparing $AttMap_{src}$ transmitted from the source 2010 with $AttMap_{dest}$ generated through the encoder 2021 of the destination 2020. ARC may be a process of measuring, as an error rate, the number of components that do not match as 1 by checking how many components of $AttMap_{dest}$ match as 1 with respect to $AttMap_{src}$. Thereafter, error detection may be performed using $threshold_{ARC}$. For example, $threshold_{ARC}$ may be a reference for determining whether semantic-level reconstructed data is data capable of delivering semantic information to a downstream task. For example, when $threshold_{ARC}$ is not satisfied, the data may not be transmitted as an input to a downstream task.

For example, a method for performing error correction based on the above-described error detection operation will be described below. As a specific example, a method for performing error correction based on an environment such as Table 2 below will be described below, but this is only an example for convenience of description and the present disclosure is not limited thereto.

[Table 2]

| | |
|---|---|
| - Fusion metric : | Max |
| - Discard ratio : | 0.9 |
| - $threshold_{att_map}$ : | *0.4* |
| - $threshold_{ARC}$ : | *2 0%* |

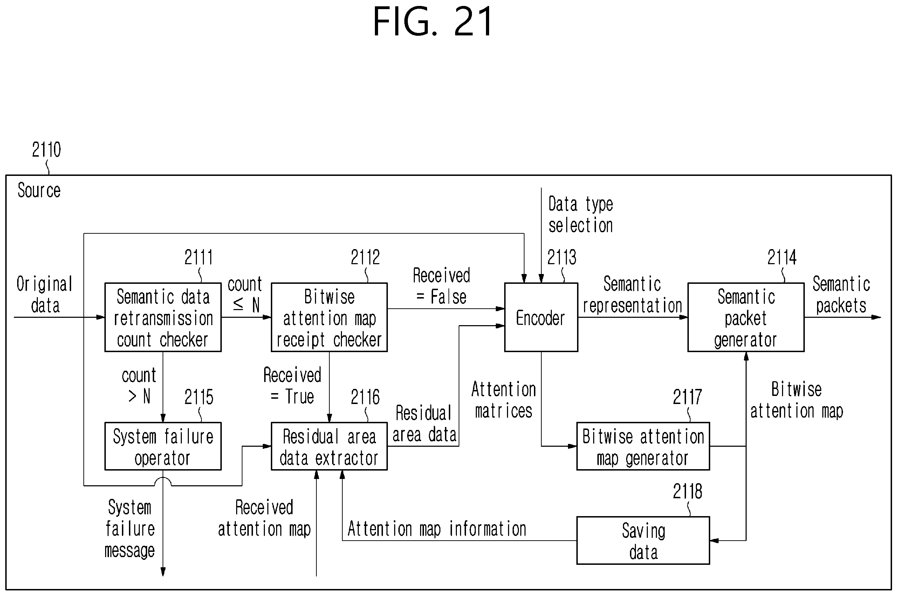

FIG. 21 shows a source structure for performing attention map-based semantic error correction applicable to the present disclosure. Referring to FIG. 21, a source 2110 may receive, from a destination, a bitwise attention map based on noisy data, e.g., data reconstructed at a semantic level at the destination. However, this is only a configuration for convenience of description and the present disclosure is not limited to the corresponding operation. Here, the bitwise attention map received by the source 2110 may be one of bitwise attention maps of Table 3 below. Specifically, the bitwise attention map received by the source 2110 may be a bitwise attention map obtained by using noisy data as an input to an encoder located at the destination. Here, the noisy data may be semantic-level reconstructed data reconstructed at a decoder of the destination by using a semantic representation transmitted by the source. For example, a bitwise attention map obtained by the destination decoding the semantic representation received from the source to obtain semantic-level reconstructed data and providing the semantic-level reconstructed data as an input to the encoder of the destination may be transmitted to the source.

As another example, the bitwise attention map received by the source 2110 may be a bitwise attention map for a remaining area excluding a portion occupied by a bitwise attention map obtained by providing noisy data as an input to the encoder of the destination among a bitwise attention map transmitted by the source 2110. For example, the bitwise attention map may be a map indicating a remaining area based on a bitwise map.

[Table 3]

| |
|---|
| ① A bitwise attention map obtained by using, as an input to an encoder located at a destination, noisy data, e.g., semantic-level reconstructed data obtained through a decoder by using a semantic representation transmitted from a source. |
| ② A bitwise attention map for a remaining area excluding a portion occupied by the bitwise attention map for ① from the bitwise attention map transmitted from the source (residual area-based bitwise attention map). |

When the source 2110 receives a bitwise attention map from the destination, the source 2110 may check whether a retransmission count for current semantic error correction exceeds a maximum retransmission count (maxSemanticRetCnt) as a threshold value. Here, a threshold for the retransmission count may be the maximum retransmission count, but may not be limited to the corresponding name. For example, whether the retransmission count for the current semantic error correction exceeds the threshold may be performed by a semantic data retransmission count checker 2111, but the present disclosure is not limited thereto. Here, the maximum retransmission count (maxSemanticRetCnt) may be a counter based on a maximum number of transmissions for error correction of a semantic area, and indiscriminate retransmission may be prevented thereby. For example, when the retransmission count for the current semantic error correction exceeds the maximum retransmission count (maxSemanticRetCnt), the source 2110 may perform a system failure operation indicating failure of semantic error correction and may transmit a system failure message. For example, the system failure operation may be performed based on a system failure operator 2115, but the present disclosure is not limited thereto. The source 2110 may perform re-configuration for semantic error correction based on the system failure or may update existing data to new data and perform transmission. However, this is only one example and the present

disclosure is not limited thereto.

When the retransmission count for the current semantic error correction does not exceed the maximum retransmission count (maxSemanticRetCnt), the source 2110 may check whether the bitwise attention map of Table 3 described above is received from the destination. For example, whether the bitwise attention map of Table 3 is received may be performed by a bitwise attention map receipt checker 2112, but the present disclosure is not limited thereto. Here, when the source 2110 does not receive the bitwise attention map and the retransmission count for error correction is 0, the source 2110 may recognize a case in which new data is transmitted from the source to the destination through semantic communication. Accordingly, the source 2110 may input the new data to an encoder 2113 to generate the above-described semantic representation and bitwise attention map and transmit the same to the destination, which is as described above.

On the other hand, when the source 2110 receives a bitwise attention map in a state in which the retransmission count for the current semantic error correction does not exceed the maximum retransmission count (maxSemanticRetCnt), the source 2110 may extract, from original data, a portion for performing semantic error correction at the destination. For example, an operation of extracting, from original data, the portion for performing semantic error correction at the destination may be performed by a residual area data extractor 2116, but this is only one example and the present disclosure is not limited thereto. For example, the operation of extracting, from original data, the portion for performing semantic error correction at the destination may vary according to a type of bitwise attention map.

Specifically, when the source 2110 receives, from the destination, a noisy data-based bitwise attention map, e.g., a bitwise attention map based on data reconstructed at a semantic level at the destination, the source may generate a bitwise attention map indicating a remaining area excluding a portion occupied by the transmitted bitwise attention map from a portion occupied by a bitwise attention map generated based on original data. Thereafter, the source 2110 may mask the original data with the corresponding bitwise attention map to extract residual area data used for correcting a semantic error as a portion for performing semantic error correction. On the other hand, when the source 2110 receives, from the destination, a residual area-based bitwise attention map, the source 2110 may mask original data with the received bitwise attention map to extract residual area data used for correcting a semantic error as a portion for performing semantic error correction.

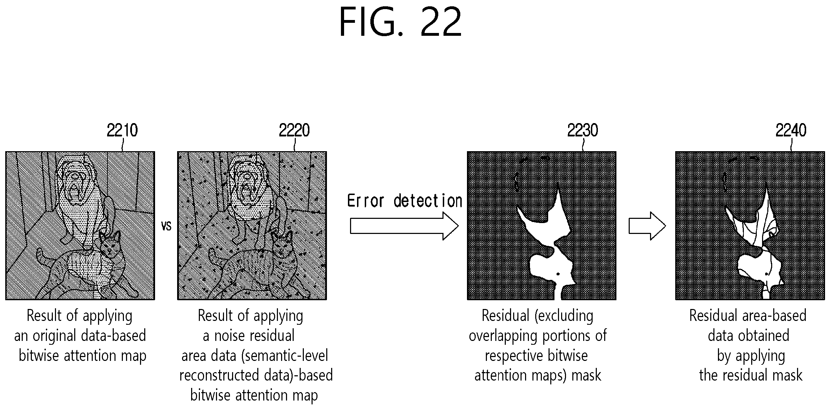

FIG. 22 shows a method for obtaining residual area data used for correcting a semantic error at a source after error detection applicable to the present disclosure. Referring to FIG. 22, a source 2110 may compare an original data-based bitwise attention map 2210 with a noisy data-based bitwise attention map 2220 received from a destination, e.g., a bitwise attention map based on data reconstructed at a semantic level at the destination. The source 2110 may derive a bitwise attention map 2230 for a remaining portion excluding overlapping portions in respective bitwise attention maps. Thereafter, the source 2110 may mask original data with the bitwise attention map for the remaining portion to finally obtain residual area data 2240 used for correcting a semantic error. Thereafter, the source 2110 may provide the residual area data 2240 as an input to an encoder 2113 to obtain a semantic representation and a bitwise attention map. Specifically, the source 2110 may obtain an attention matrix based on the residual area data 2240 and perform a bitwise operation on the attention matrix based on $threshold_{at_map}$ to obtain a final bitwise attention map. For example, the attention matrix generated at the encoder 2113 may be derived as a bitwise attention map by a bitwise attention map generator 2117 and may be transmitted to a semantic packet generator 2114. In addition, the semantic representation generated at the encoder 2113 may also be transmitted to the semantic packet generator 2114, and the semantic representation and the bitwise attention map may be configured as a semantic packet and transmitted to the destination, but the present disclosure is not limited thereto. After transmitting the semantic packet, the source 2110 may store 2118 the bitwise attention map included in the semantic packet. In addition, the source 2110 may store a bitwise attention map based on residual area data configured in the semantic packet based on whether to perform error detection on residual area data-based semantic-level reconstructed data based on an initial operation configuration, but the present disclosure is not limited thereto.

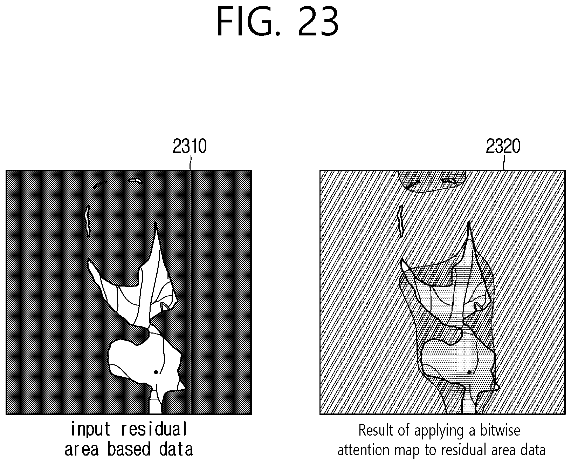

FIG. 23 shows a residual area data-based bitwise attention map used for correcting a semantic error applicable to the present disclosure. Referring to FIG. 23, residual area data 2310 may be obtained through masking based on a bitwise attention map for a remaining portion in original data. Specifically, residual area data 2310 used for correcting a semantic error may be obtained through an operation of a residual area extractor 2116 based on a bitwise attention map received from a destination in original data.

Thereafter, the residual area data 2310 may be provided as an input to an encoder 2113 of the source 2110 such that a semantic representation and a bitwise attention map 2320 for the residual area data may be generated. The source 2110 may transmit, to a destination, the semantic representation and the bitwise attention map generated based on the residual area data 2310.

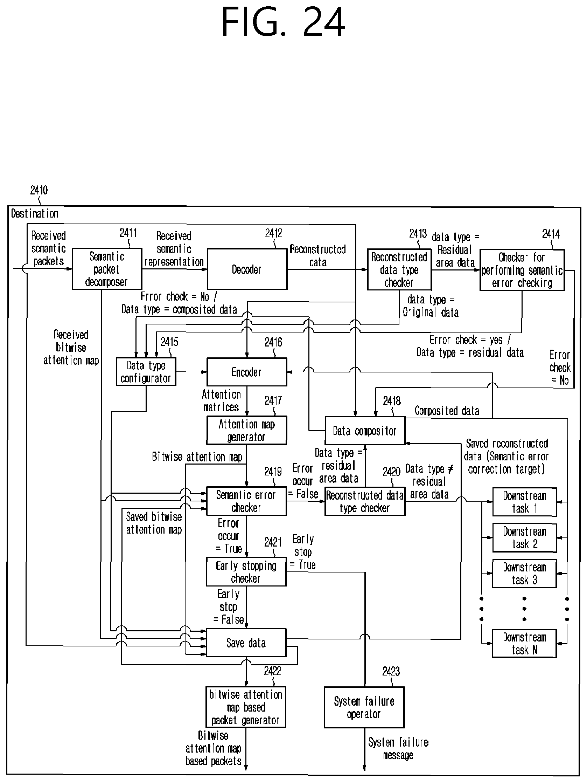

FIG. 24 shows a destination structure for performing semantic error correction applicable to the present disclosure. Referring to FIG. 24, a destination 2410 may reconstruct, through a decoder 2412 using a semantic representation transmitted from a source, semantic-level reconstructed data for residual area data used for correcting a semantic error, thereby obtaining reconstructed data at a semantic level. As a specific example, the destination 2410 may receive a semantic packet including a semantic representation and a bitwise attention map from the source and

decompose the semantic packet into the semantic representation and the bitwise attention map. Here, the semantic packet may be decomposed into the semantic representation and the bitwise attention map through a semantic packet decomposer 2411, but the present disclosure is not limited thereto.

The destination 2410 may obtain semantic-level reconstructed data through the semantic representation. Here, a reconstructed data type checker 2413 may check a type of the semantic-level reconstructed data. The type of the semantic-level reconstructed data may be residual area data used for correcting a semantic error or original data, e.g., new data for initially checking a semantic error. When the type of the semantic-level reconstructed data is original data, the type may be configured as original data and then transmitted to a data type configurator 2415. On the other hand, when the type of the semantic-level reconstructed data is residual area data, the destination 2410 may determine whether to perform error detection on semantic-level reconstructed data for residual area data used for correcting a semantic error. For example, whether to perform error detection on semantic-level reconstructed data for residual area data used for correcting a semantic error may be performed by a checker for performing semantic error checking 2414 of the destination 2410, but the present disclosure is not limited thereto. For example, the above-described operation based on whether to perform error detection on residual area data-based semantic-level reconstructed data may be selected based on an initial operation configuration of the destination 2410, but the present disclosure is not limited thereto.

When semantic error detection is performed on residual area data-based semantic-level reconstructed data used for correcting a semantic error, the data type may be configured as residual area data and transmitted to the data type configurator 2415.

On the other hand, when error detection is not performed on residual area data-based semantic-level reconstructed data used for correcting a semantic error, synthesis may be performed with semantic-level reconstructed data obtained in a previous process as data to be semantically error-corrected. For example, data synthesis may be performed by a data compositor 2418, but the present disclosure is not limited thereto. Here, the data type may be configured as composited data at a semantic level and transmitted to the above-described data type configurator 2415. Reconstructed data at a semantic level obtained through the decoder 2412 or composited data obtained through the data compositor 2418 may be transmitted as an input to an encoder 2414. The encoder 2414 may select data transmitted to the encoder 2414 based on the data type transmitted from the data type configurator 2415 and use the selected data as an input to the encoder 2414.

An encoder 2416 may obtain an attention matrix by applying a configured matrix based on input data and may obtain a final bitwise attention map based on a same threshold $threshold_{att_map}$ as the source. For example, the above-described operation may be performed by an attention map generator 2417 of the destination 2410, but the present disclosure is not limited thereto.

Thereafter, the destination 2410 may perform attention aware redundancy check (ARC) comparing the final bitwise attention map with the received bitwise attention map. For example, ARC may be performed by a semantic error checker 2419 of the destination 2410, but the present disclosure is not limited thereto. When semantic error detection is performed on residual area data-based semantic-level reconstructed data used for correcting a semantic error, an ARC operation for checking an error rate may be performed by comparing a received bitwise attention map related to residual area data with a bitwise attention map generated based on reconstructed data obtained by reconstructing, at a semantic level, a semantic representation for residual area data received at the destination 2410. For example, based on the ARC operation, whether an error rate is less than a threshold $threshold_{ARC}$ may be checked.

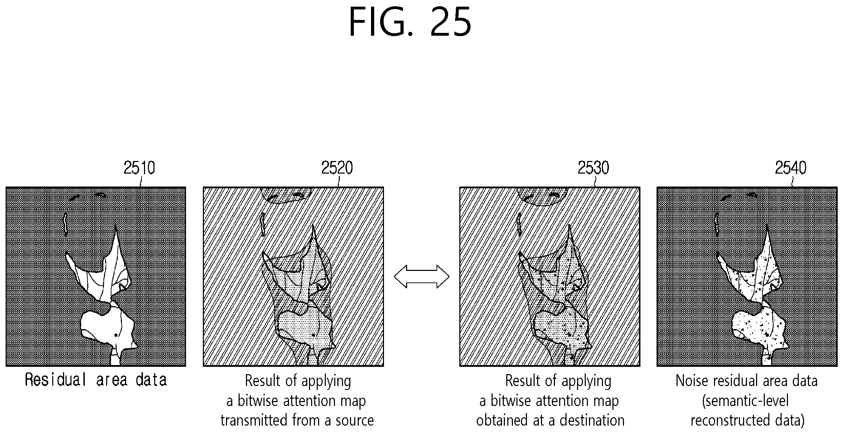

FIG. 25 shows an ARC operation for residual area data used for correcting a semantic error applicable to the present disclosure. Referring to FIG. 25, a source may generate a bitwise attention map 2520 from residual area data 2510 and transmit the bitwise attention map 2520 to a destination, which is as described above. The destination 2410 may generate semantic-level reconstructed data based on a semantic representation obtained from the source and may generate a bitwise attention map 2530 through the semantic-level reconstructed data, and may perform an ARC operation comparing the two bitwise attention maps. Here, when a semantic error does not occur, a data type of the semantic-level reconstructed data may be checked. For example, type checking for the semantic-level reconstructed data may be performed by a reconstructed data type checker 2420, but the present disclosure is not limited thereto. For example, in the above-described case, the semantic-level reconstructed data may be residual area data used for correcting a semantic error, and the residual area data may be transmitted to the above-described data compositor 2418 and combined with semantic-level reconstructed data of a previous process. On the other hand, when the semantic-level reconstructed data is not residual data, the semantic-level reconstructed data may be transmitted as an input to a downstream task, which will be described later.

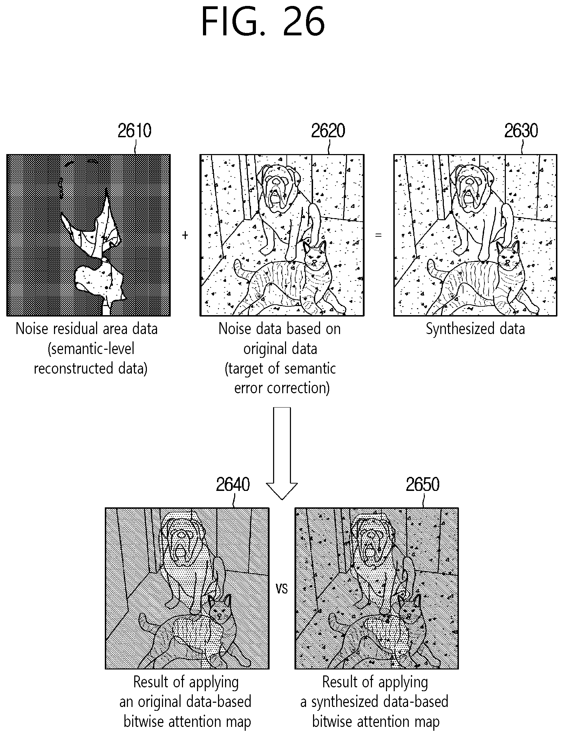

As another example, when semantic error detection is not performed on residual area data-based semantic-level reconstructed data used for correcting a semantic error, synthesis may be performed with data to be semantically error-corrected and residual area data-based semantic-level reconstructed data, and a bitwise attention map may be obtained from synthesized data. Here, an ARC operation may be performed between an original data-based bitwise attention map received in a previous process and a bitwise attention map generated from synthesized data. For example, FIG. 26 shows a method for performing an ARC operation applicable to the present disclosure. Referring to FIG. 26, the destination 2410

may synthesize residual area data 2610 reconstructed at a semantic level and semantic-level reconstructed data 2620 stored in a previous process as data to be semantically error-corrected. Here, semantic error detection is not performed on the residual area data 2610 reconstructed at the semantic level. Here, a bitwise attention map 2650 may be obtained based on semantic-level synthesized data and may be compared with an original data-based bitwise attention map 2640. An ARC operation may be performed through the above-described comparison. For example, whether an error rate is less than a threshold $threshold_{ARC}$ may be determined. Here, when the error rate is less than the above-described threshold, it may be determined that a semantic error does not occur through semantic error correction in the semantic-level synthesized data. Accordingly, the destination 2410 may use the semantic-level synthesized data as an input to a downstream task to perform a task according to an intention desired by the source.

In addition, for example, when an error occurs based on semantic error check in FIG. 24, early stopping check may be performed. Here, the early stopping check may be performed by an early stopping checker 2421, but the present disclosure is not limited thereto. More specifically, the early stopping check may be determined based on whether an error rate is improved by greater than or equal to a certain rate. For example, an early stopping threshold $threshold_{earlystop}$ for the above-described determination may be configured. The destination may determine whether to stop a semantic error correction operation through early stopping based on a threshold $threshold_{earlystop}$. For example, when a semantic error rate measured based on data obtained by performing synthesis on data to be semantically error-corrected is improved by greater than or equal to a configured threshold $threshold_{earlystop}$ compared to a previously measured semantic error rate, the destination 2410 may configure a new residual area based on a currently configured residual area and allow retransmission for semantic error correction to be performed. For example, the destination 2410 may generate a bitwise attention map-based packet through a bitwise attention map-based packet generator 2422 and transmit the bitwise attention map-based packet to a source.

On the other hand, when data obtained by performing synthesis on data to be semantically error-corrected is improved only by a semantic error rate less than a configured threshold $threshold_{earlystop}$, the destination 2410 may determine early stopping. More specifically, in the corresponding situation, retransmission for existing data may be more efficient than retransmission for residual area data. For example, since an error rate is not improved even when residual area data-based retransmission is performed, retransmission needs to be performed based on existing original data. In consideration of the above-described point, the destination 2410 may perform early stopping and perform a system failure operation even when a current retransmission count is less than a maximum retransmission count *maxSemanticRetCnt* related to a retransmission count checked by a source by configuring an early stopping check-related threshold $threshold_{earlystop}$. Accordingly, the destination 2410 may perform a re-configuration operation for currently performed semantic error correction or prepare an operation for receiving new data instead of existing data, but the present disclosure is not limited thereto.

After early stopping is determined at the destination 2410, a system failure operation may be performed and a system failure message may be transmitted. For example, the system failure operation may be performed based on a system failure operator 2423, but the present disclosure is not limited thereto. The destination 2410 may perform re-configuration for semantic error correction based on the system failure or may update existing data to new data and perform transmission. However, this is only one example and the present disclosure is not limited thereto.

On the other hand, when the destination 2410 determines not to perform early stopping, the destination 2410 may store semantic-level reconstructed data and a bitwise attention map based on a data type used as an input to an encoder 2416. In addition, after performing a bitwise attention map-related operation to be transmitted to a source, the destination 2410 may transmit a bitwise attention map in order to request retransmission for semantic error correction from the source. Here, the bitwise attention map-related operation may be an operation based on a type of bitwise attention map received at the source. For example, when performing initial configuration, the destination 2410 may determine which bitwise attention map is to be transmitted to the source.

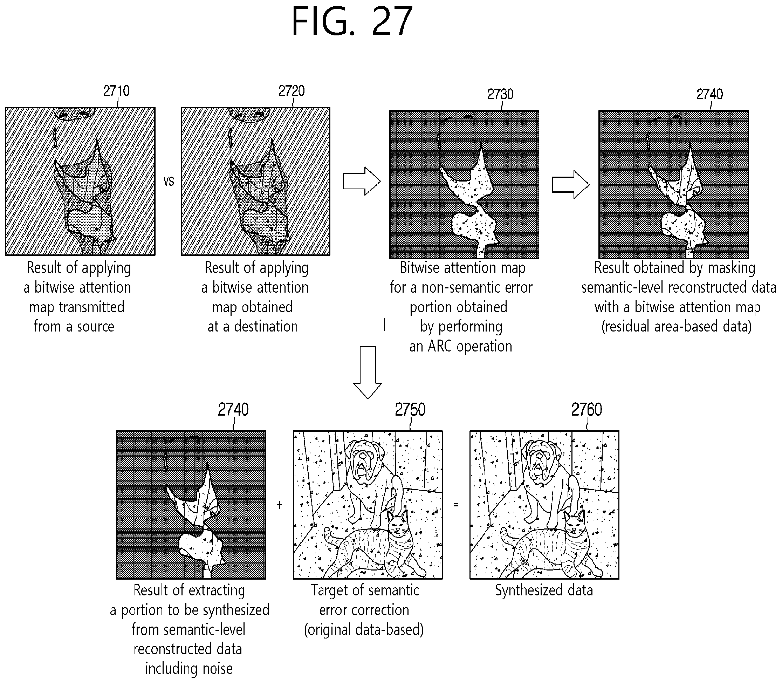

For example, when a target of semantic error detection is semantic-level reconstructed data for residual area data used for correcting a semantic error and an error does not occur based on semantic error check, synthesis may be performed with data to be semantically error-corrected by using only a portion corresponding to a non-semantic error area in the semantic-level reconstructed data. For example, FIG. 27 shows a method for performing data synthesis using reconstructed data based on residual area data used for correcting a semantic error applicable to the present disclosure. Referring to FIG. 27, semantic error detection may be performed on reconstructed data based on residual area data used for correcting a semantic error. For example, an ARC operation may be performed by comparing a bitwise attention map 2710 transmitted from a source with a bitwise attention map 2720 obtained through residual area data-based semantic-level reconstructed data obtained at the destination. Here, when the ARC operation is performed and a threshold $threshold_{ARC}$ is less than the threshold, the destination 2410 may obtain a bitwise attention map 2730 for a non-semantic error area, and may mask semantic-level reconstructed data with the bitwise attention map 2730 to obtain residual area data 2740 used for correcting a semantic error. Thereafter, the residual area data 2740 may be synthesized with data 2750 obtained in a previous process as data to be semantically error-corrected.

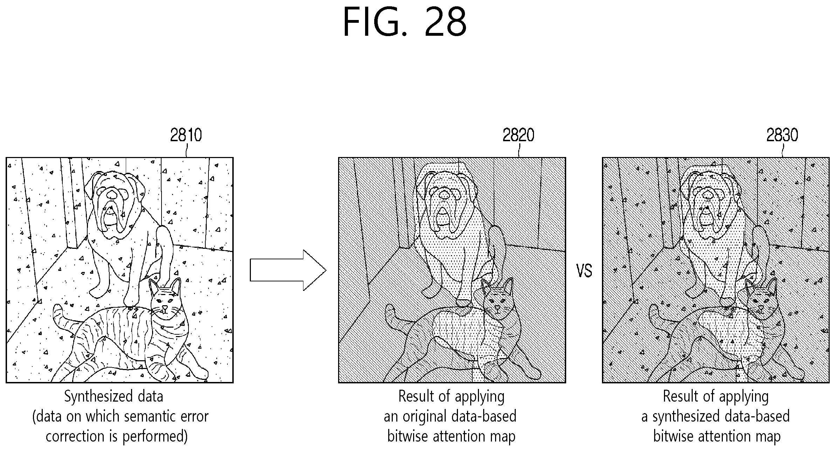

For example, FIG. 28 shows a method for obtaining an attention map based on synthesized data applicable to the

present disclosure and performing semantic error check based thereon. Referring to FIG. 28, based on semantic-level synthesized data 2810 through FIG. 27, a bitwise attention map 2830 may be generated, and semantic error check comparing the bitwise attention map 2830 with an original data-based bitwise attention map 2820 may be performed. Here, when a semantic error rate is less than a threshold, semantic error rate < $threshold_{ARC}$, the destination 2410 may use the corresponding data as an input to a downstream task to perform a task operation according to an intention desired by the source. On the other hand, when a semantic error rate is greater than a threshold based on semantic error check, semantic error rate ≥ $threshold_{ARC}$, the destination 2410 may determine that a semantic error exists in synthesized data and may perform the above-described early stopping check. Thereafter, the destination 2410 may perform a process for determining whether to request retransmission for residual area data for semantic error correction, which is as described above.

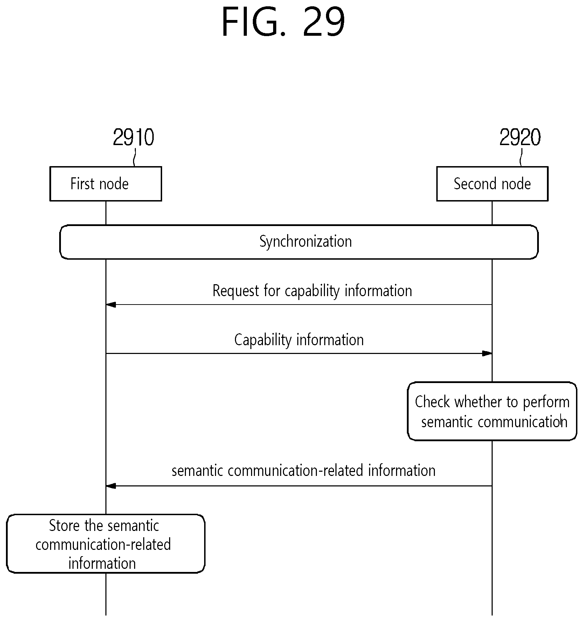

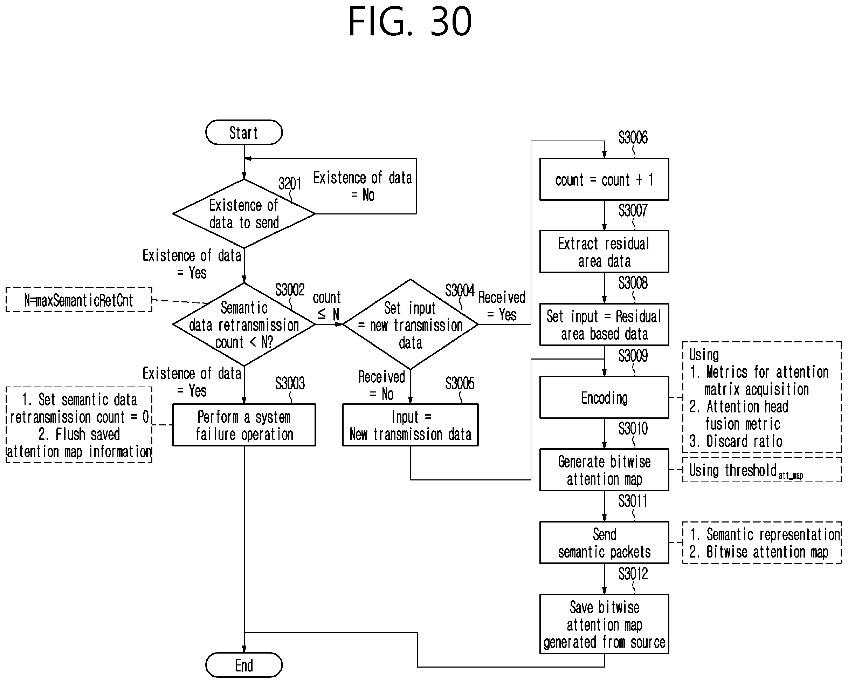

FIG. 29 shows an initial configuration method for semantic communication applicable to the present disclosure. Referring to FIG. 29, a first node 2910 may obtain a synchronization signal from a second node 2920 and may be connected by performing synchronization. For example, the first node 2910 may be the above-described source, and the second node 2920 may be the above-described destination. As another example, the first node 2910 may be the above-described destination, and the second node 2920 may be the above-described source. In addition, for example, in FIG. 30, the first node 2910 may be a UE, and the second node 2920 may be a base station. In addition, for example, the first node 2910 may be a base station and the second node 2920 may be a UE, and the present disclosure is not limited to a specific form. In addition, for example, FIG. 30 may be applicable to both unidirectional communication and bidirectional communication and the present disclosure is not limited to a specific form.

However, for convenience of description, description will be provided based on a case in which the first node 2910 is a UE and the second node 2920 is a base station. The second node 2920 may request capability information from the first node 2910. Here, the capability information may include various types of information based on a type of the first node. For example, the capability information may include information indicating whether the first node 2910 has a semantic communication performing capability described above. For example, the capability information may include semantic communication capability information of the first node 2910. The first node 2910 may transmit capability information to the second node 2920 based on a request of the second node 2920. Here, for example, the capability information may further include information related to a type of raw data that the first node 2910 can generate, collect, or process, and operation capability information of a device, and the present disclosure is not limited to a specific form. Thereafter, the second node 2920 may determine whether to perform semantic communication. For example, the second node 2920 may recognize, based on capability information of the first node 2910, that the first node 2910 has a capability of performing semantic communication. In addition, the second node 2920 may further consider other obtained information and other parameters to determine whether to perform semantic communication and may indicate whether to perform semantic communication to the first node 2910. For example, when determining to perform communication based on semantic communication with the first node 2910, the second node 2920 may transmit, to the first node 2910, information indicating semantic communication. Here, the information indicating semantic communication may include semantic communication-related information. Thereafter, the first node 2910 may store the semantic communication-related information transmitted together with semantic communication indication information. For example, the semantic communication-related information may include an encoder/decoder model, an attention matrix operation scheme, an attention head fusion matrix, an attention value discard ratio, a bitwise attention map-related threshold, an error detection-related threshold, a maximum semantic data transmission count, and an early stopping threshold. For example, the attention matrix operation scheme included in the semantic communication-related information may be information related to Equations 4 to 6, but the present disclosure is not limited thereto. In addition, the bitwise attention map-related threshold may be $threshold_{att_map}$ and the error detection-related threshold may be $threshold_{ARC}$, but the present disclosure is not limited thereto.

In addition, for example, the maximum semantic data transmission count may be the above-described maximum retransmission count (maxSemanticRetCnt). In addition, for example, the early stopping threshold may be the above-described $threshold_{earlystop}$, but the present disclosure is not limited thereto.

In addition, the semantic communication indication information and the semantic communication-related information may be transmitted from the second node 2920 to the first node 2910 through at least one of downlink control information (DCI), medium access control (MAC) control element (CE), or a radio resource control (RRC) message.

As another example, semantic communication indication information may be indicated through upper layer signaling, and semantic communication-related information may be transmitted through DCI. For example, when obtaining capability information from the first node 2910 and when semantic communication according to the above-described scheme is possible, the second node 2920 may transmit semantic communication-related information to the first node 2910. The first node 2910 may store received information and may perform the above-described semantic communication. In addition, for example, each step and operation of FIG. 29 may be omitted or merged based on configuration or setting, and the present disclosure is not limited to a specific form.

FIG. 30 shows a source operation method applicable to the present disclosure. Referring to FIG. 30, a source

may check whether data to be transmitted exists (S3001). When the data to be transmitted exists at the source, the source may check whether a semantic data retransmission count is less than a maximum retransmission count (S3002). For example, the maximum retransmission count may be the above-described maxSemanticRetCnt, but the present disclosure is not limited thereto. Here, when the retransmission count is greater than the maximum retransmission count, the source may perform a system failure operation (S3003). For example, the source may perform re-configuration for semantic error correction based on the system failure or may update existing data to new data and perform transmission. As another example, the source may reset the semantic data retransmission count to 0 and initialize previously stored bitwise attention map information, but the present disclosure is not limited thereto. On the other hand, when the retransmission count is less than or equal to the maximum retransmission count, the source may check whether a received bitwise attention map exists (S3004). Here, when the received bitwise attention map does not exist at the source, the source may recognize that new data transmission is performed. For example, an input may be new data (S3005), and the new data may be encoded (S3009). On the other hand, when the received bitwise attention map exists at the source, the source may increment the retransmission count by one (S3006), may extract residual area data used for correcting a semantic error based on the bitwise attention map (S3007), may recognize that transmission of residual area data for semantic error correction is performed (S3008), and the residual area data may be encoded (S3009). For example, encoding may be performed in consideration of a matrix for obtaining an attention matrix, a fusion matrix, and an attention value discard ratio, which are as described above. Thereafter, the source may generate a bitwise attention map based on encoding (S3010). Here, the bitwise attention map may be generated through a threshold $threshold_{att_map}$ based on the attention matrix. Thereafter, the source may generate a semantic packet including the bitwise attention map and a semantic representation and may transmit the semantic packet to a destination, which is as described above (S3011). Thereafter, the source may store the bitwise attention map transmitted to the destination (S3012).

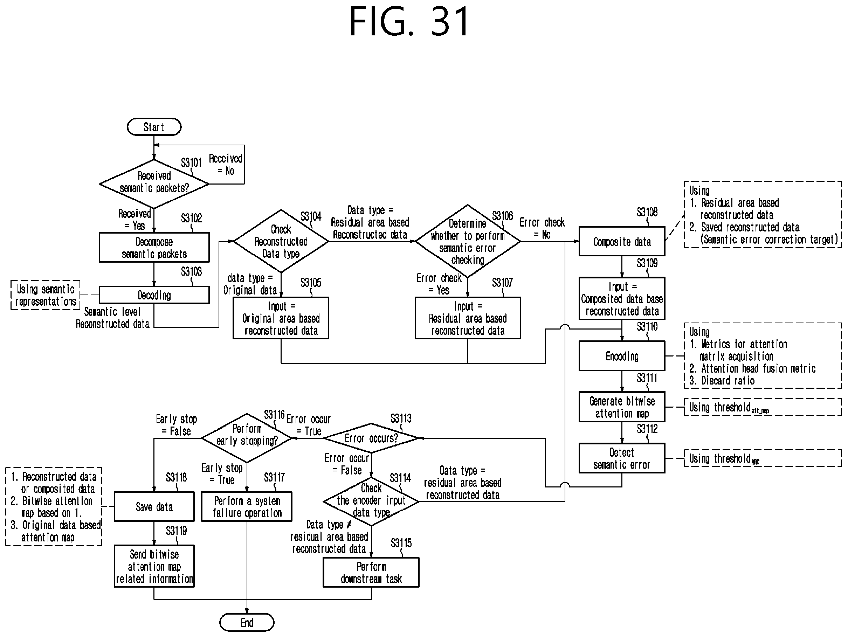

FIG. 31 shows a destination operation method applicable to the present disclosure. Referring to FIG. 31, a destination may receive a semantic packet transmitted from a source (S3101). Here, the semantic packet may include a semantic representation and a bitwise attention map, and the destination may obtain the semantic representation and the bitwise attention map from the received semantic packet. For example, the received semantic packet may be decomposed into the semantic representation and the bitwise attention map through a semantic decomposer. Thereafter, semantic-level reconstructed data may be obtained by performing decoding from the semantic representation obtained through the semantic decomposer (S3102).

Thereafter, the destination may check a type of the semantic-level reconstructed data (S3104). Here, when the semantic-level reconstructed data is original data-based reconstructed data, the reconstructed data may be provided as an input to an encoder (S3105). Encoding may be performed in a same scheme as a source, and accordingly, a bitwise attention map may be generated. On the other hand, when the semantic-level reconstructed data is residual area data-based reconstructed data, whether semantic error check is required may be determined (S3106). For example, whether semantic error check is required may be determined based on initial configuration, but the present disclosure is not limited thereto. Here, when semantic error check is required, residual area data used for correcting a semantic error may be provided as an input to the encoder (S3107). Encoding may be performed in a same scheme as the source, and accordingly, a bitwise attention map may be generated. On the other hand, when semantic error check is not required, the destination may synthesize semantic-level reconstructed data for residual area data and semantic-level reconstructed data stored in a previous process as data to be semantically error-corrected (S3108). Here, synthesized semantic-level reconstructed data may be provided as an input to the encoder (S3109). Encoding may be performed in a same scheme as the source, and accordingly, a bitwise attention map may be generated. For example, an encoding input may be determined as original data-based reconstructed data, semantic-level reconstructed data for a residual area based on whether semantic error check is performed, or semantic-level synthesized data. Thereafter, the destination may perform encoding in consideration of a matrix for obtaining an attention matrix, a fusion matrix, and an attention value discard ratio in a same scheme as the source (S3110). Thereafter, the destination may generate a bitwise attention map in a same scheme as the source (S3111). Here, the bitwise attention map may be generated through a threshold $threshold_{att_map}$ based on the attention matrix. Thereafter, the destination may perform semantic error detection, and the semantic error detection may be performed through a threshold $threshold_{ARC}$ (S3112). Here, when it is checked whether a semantic error occurs (S3113) and the semantic error is not detected, the destination may check an input data type of the encoder (S3114). For example, when the data type is residual area data, combination with semantic-level reconstructed data of a previous process may be performed. On the other hand, when the data type is not residual area data, the corresponding data may be semantic-level reconstructed data for original data or synthesized data. The destination may transmit the corresponding data to a downstream task and may perform an operation intended by the source through task performance (S3115).

On the other hand, when a semantic error is detected upon checking whether a semantic error occurs (S3113), the destination may check whether to perform early stopping (S3116). Here, early stopping may be determined based on a threshold $threshold_{earlystop}$, which is as described above. For example, when early stopping is determined based on checking whether to perform early stopping, the destination may perform a system failure operation, which is as described

above (S3117). On the other hand, when early stopping is not performed based on checking whether to perform early stopping, the destination may store semantic-level reconstructed data or semantic-level synthesized data, a bitwise attention map based thereon, and a bitwise attention map based on received original data (S3118), and may transmit bitwise attention map information based on the semantic-level reconstructed data or the semantic-level synthesized data to a source, which is as described above (S3119).

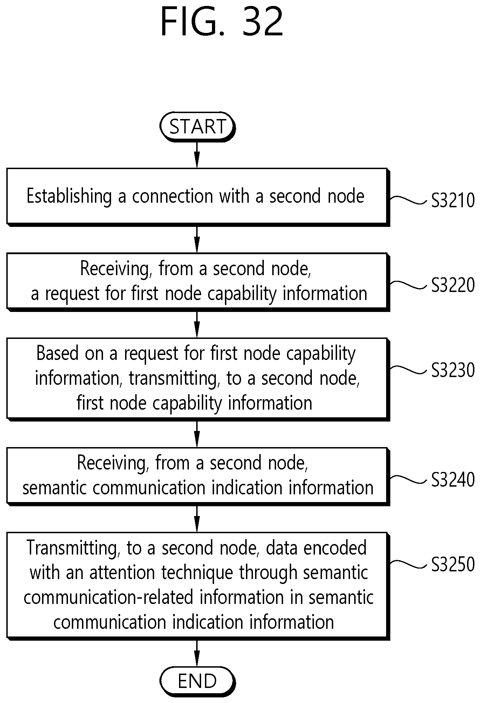

FIG. 32 is a flowchart showing a method for operating a first node applicable to the present disclosure. Referring to FIG. 32, a first node may establish a connection with a second node (S3210). Here, the first node may be the above-described source, and the second node may be the above-described destination. As another example, the first node may be the above-described destination, and the second node may be the above-described source. In addition, for example, the first node may be a UE, and the second node may be a base station. In addition, for example, the first node may be a base station and the second node may be a UE, and the present disclosure is not limited to a specific form. In addition, for example, FIG. 32 may be applicable to both unidirectional communication and bidirectional communication, and the present disclosure is not limited to a specific form.

Here, the first node may receive, from the second node, a request for first node capability information (S3220), and may transmit, to the second node, first node capability information based thereon (S3230). For example, the first node capability information may include information indicating whether the first node supports downstream task-based semantic communication. In addition, the first node capability information may further include at least one of first node generation information, first node collection information, processable raw data type information, or device operation capability information, which are as described above. Thereafter, the first node may receive semantic communication indication information from the second node (S3240). Here, semantic communication-related information in the semantic communication indication information may include at least one of an encoder model, a decoder model, an attention matrix operation scheme, a fusion matrix, an attention value discard ratio, a bitwise attention map threshold, an error detection threshold, a maximum retransmission count, or an early stopping threshold, which are as described above. Thereafter, the first node may encode data with an attention technique through the received semantic communication-related information and may transmit the encoded data to the second node (S3250). Here, the first node may encode data and transmit the encoded data to the second node based on whether a first bitwise attention map is received from the second node and a semantic data retransmission count. For example, when data to be transmitted to the second node exists, the first node may compare the semantic data retransmission count with a maximum retransmission count. When the semantic data retransmission count is less than a maximum value and the first node receives the first bitwise attention map from the second node, the first node may generate residual area data used for correcting a semantic error and may perform encoding. In addition, when the semantic data retransmission count is less than the maximum value and the first node does not receive the first bitwise attention map from the second node, the first node may recognize that data transmitted to the second node is new data and may encode and transmit the corresponding data. Here, encoding may be performed based on at least one of an attention matrix operation scheme, a fusion matrix, or an attention value discard ratio. In addition, the first node may generate a semantic representation and a second bitwise attention map based on encoding and may transmit, to the second node, a semantic representation including the semantic representation and the second bitwise attention map. For example, when the first bitwise attention map received by the first node is a semantic-level reconstructed data-based bitwise attention map, the first node may obtain a residual area-based bitwise attention map by comparing an original data-based bitwise attention map with the semantic-level reconstructed data-based bitwise attention map. In addition, the first node may generate residual area data used for correcting a semantic error based on the residual area bitwise attention map. On the other hand, when the first bitwise attention map received by the first node is a residual area data-based bitwise attention map, the first node may generate residual area data based on the residual area bitwise attention map.

In addition, when the semantic data retransmission count is greater than the maximum value, the first node may perform a system failure operation. Here, the first node may perform at least one of system failure message transmission, semantic error correction re-configuration, or data update based on the system failure operation, which is as described above.

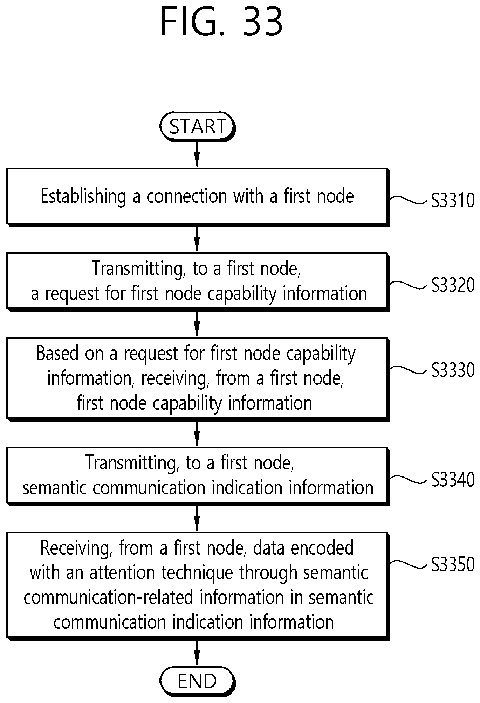

FIG. 33 is a flowchart showing a method for operating a second node applicable to the present disclosure. Referring to FIG. 33, a second node may establish a connection with a first node (S3310). Here, the first node may be the above-described source, and the second node may be the above-described destination. As another example, the first node may be the above-described destination, and the second node may be the above-described source. In addition, for example, the first node may be a UE, and the second node may be a base station. In addition, for example, the first node may be a base station and the second node may be a UE, and the present disclosure is not limited to a specific form. In addition, for example, FIG. 33 may be applicable to both unidirectional communication and bidirectional communication, and the present disclosure is not limited to a specific form.

Here, the second node may transmit, to the first node, a request for first node capability information (S3320), and may receive, from the first node, first node capability information based thereon (S3330). For example, the first node capability information may include information indicating whether the first node supports downstream task-based

semantic communication. In addition, the first node capability information may further include at least one of first node generation information, first node collection information, processable raw data type information, or device operation capability information, which are as described above. Thereafter, the second node may transmit semantic communication indication information to the first node (S3340). Here, semantic communication-related information in the semantic communication indication information may include at least one of an encoder model, a decoder model, an attention matrix operation scheme, a fusion matrix, an attention value discard ratio, a bitwise attention map threshold, an error detection threshold, a maximum retransmission count, or an early stopping threshold, which are as described above. Thereafter, the second node may receive, from the first node, data encoded with an attention technique through the received semantic communication-related information (S3350).

Here, the second node may perform a downstream task through data received from the first node based on whether semantic error check is performed and whether a semantic error occurs. For example, the second node may receive a semantic packet from the first node and may obtain a semantic representation and a first bitwise attention map through the received semantic packet. Here, the received semantic packet may be decomposed into the semantic representation and the first bitwise attention map based on a semantic decomposer, but the present disclosure is not limited thereto. Thereafter, the second node may decode the semantic representation to obtain semantic-level reconstructed data from the semantic representation. Here, the semantic-level reconstructed data may be data reconstructed at a semantic level from a semantic representation related to newly transmitted data, and the first bitwise attention map may be a bitwise attention map based on the newly transmitted data. In addition, the semantic-level reconstructed data may be residual area-based semantic-level reconstructed data used for correcting a semantic error, and the first bitwise attention map may be a residual area-based bitwise attention map.

In addition, when the second node performs semantic error check for residual area data used for correcting a semantic error, encoding may be performed on residual area-based semantic-level reconstructed data in a same scheme as an encoding scheme of the first node. On the other hand, when the second node does not perform semantic error check for residual area data used for correcting a semantic error, encoding may be performed in a same scheme as an encoding scheme of the first node by synthesizing residual area-based semantic-level reconstructed data and stored semantic-level reconstructed data. Here, encoding may be performed based on at least one of an attention matrix operation scheme, a fusion matrix, or an attention value discard ratio. A second bitwise attention map may be generated based on encoding, and semantic error detection may be performed based on the first bitwise attention map and the second bitwise attention map.

Here, when a semantic error occurs through an error detection threshold based on performed semantic error detection, the second node may determine whether to perform early stopping. In addition, when the semantic error does not occur through the error detection threshold based on the performed semantic error detection, the second node may perform a downstream task after performing a data type check.

For example, when a semantic error occurs, whether to perform early stopping may be determined through an early stopping threshold based on the first bitwise attention map and the second bitwise attention map. In addition, when the second node performs early stopping, the second node may perform a system failure operation. The second node may perform at least one of system failure message transmission, semantic error correction re-configuration, or data update based on the system failure operation. In addition, when the second node does not perform early stopping, the second node may store at least one of residual area-based semantic-level reconstructed data or synthesized data, and may store a bitwise attention map based on the stored data and then transmit the bitwise attention map to the first node.

It is evident that the examples of the proposed methods described above may also be included as implementation methods of the present disclosure and may be regarded as types of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

## INDUSTRIAL AVAILABILITY

The embodiments of the present disclosure are applicable to various radio access systems. Examples of the

various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

**1.** A method performed by a first node in a wireless communication system, the method comprising:

establishing a connection with a second node;
receiving, from the second node, a request for first node capability information;
based on the request for the first node capability information, transmitting, to the second node, the first node capability information;
receiving, from the second node, semantic communication indication information; and
transmitting, to the second node, data encoded with an attention technique through semantic communication-related information in the semantic communication indication information,
wherein the first node transmits, to the second node, the data by encoding the data based on whether a first bitwise attention map is received from the second node and a semantic data retransmission count.

**2.** The method of claim 1,
wherein the semantic communication-related information in the semantic communication indication information includes at least one of an encoder model, a decoder model, an attention matrix operation scheme, a fusion matrix, an attention value discard ratio, a bitwise attention map threshold, an error detection threshold, a maximum retransmission count, or an early stopping threshold.

**3.** The method of claim 1,
wherein, based on that the data to be transmitted to the second node exists, the first node compares the semantic data retransmission count with a maximum retransmission count.

**4.** The method of claim 3,

wherein, based on that the semantic data retransmission count is less than the maximum value and the first node receives the first bitwise attention map from the second node, the first node generates residual area data used for correcting a semantic error and performs the encoding, and
wherein, based on that the semantic data retransmission count is less than the maximum value and the first node does not receive the first bitwise attention map from the second node, the first node determines the data transmitted to the second node as new data and performs the encoding.

**5.** The method of claim 4,

wherein the encoding is performed based on at least one of an attention matrix operation scheme, a fusion matrix, or an attention value discard ratio, and
wherein the first node generates a semantic representation and a second bitwise attention map based on the encoding, and transmits, to the second node, a semantic packet including the semantic representation and the second bitwise attention map.

**6.** The method of claim 4,

wherein, based on that the first bitwise attention map received by the first node is a semantic-level reconstructed data-based bitwise attention map, the first node obtains a residual area-based bitwise attention map by comparing an original data-based bitwise attention map with the semantic-level reconstructed data-based bitwise attention map, and
wherein the first node generates the residual area data based on the residual area-based bitwise attention map.

**7.** The method of claim 4,

wherein, based on that the first bitwise attention map received by the first node is a residual area data-based bitwise attention map used for correcting a semantic error, the first node generates the residual area data based on the residual area data-based bitwise attention map.

**8.** The method of claim 3,
wherein, based on that the semantic data retransmission count is greater than the maximum value, the first node performs a system failure operation.

**9.** The method of claim 8,
wherein, based on the system failure operation, the first node performs at least one of system failure message transmission, semantic error correction re-configuration, or data update.

**10.** A method performed by a second node in a wireless communication system, the method comprising:

establishing a connection with a first node;
transmitting, to the first node, a request for first node capability information;
based on the request for the first node capability information, receiving, from the first node, the first node capability information;
transmitting, to the first node, semantic communication indication information; and
receiving, from the first node, data encoded with an attention technique through semantic communication-related information in the semantic communication indication information,
wherein the second node performs a downstream task through the data received from the first node based on whether semantic error check is performed and whether a semantic error occurs.

**11.** The method of claim 10,
wherein the semantic communication-related information in the semantic communication indication information includes at least one of an encoder model, a decoder model, an attention matrix operation scheme, a fusion matrix, an attention value discard ratio, a bitwise attention map threshold, an error detection threshold, a maximum retransmission count, or an early stopping threshold.

**12.** The method of claim 11,

wherein the second node receives a semantic packet from the first node,
wherein the second node obtains a semantic representation and a first bitwise attention map from the received semantic packet,
wherein the second node obtains semantic-level reconstructed data from the semantic representation, and
wherein the semantic-level reconstructed data is residual area-based semantic-level reconstructed data, and the first bitwise attention map is a residual area-based bitwise attention map.

**13.** The method of claim 12,

wherein, based on that the second node performs the semantic error check, the second node performs encoding on the residual area-based semantic-level reconstructed data in a same scheme as an encoding scheme of the first node, and
wherein, based on that the second node does not perform the semantic error check, the second node synthesizes the residual area-based semantic-level reconstructed data and stored semantic-level reconstructed data and performs encoding in a same scheme as an encoding scheme of the first node.

**14.** The method of claim 13,

wherein the encoding is performed based on at least one of an attention matrix operation scheme, a fusion matrix, or an attention value discard ratio, and
wherein the second node generates a second bitwise attention map based on the encoding and performs semantic error detection based on the second bitwise attention map.

**15.** The method of claim 14,

wherein, in case that a semantic error occurs based on the performed semantic error detection, the second node

determines whether to perform early stopping, and
wherein, in case that the semantic error does not occur based on the performed semantic error detection, the second node performs the downstream task after performing a data type check.

**16.** The method of claim 15,

wherein the second node determines whether the semantic error occurs through the error detection threshold based on the first bitwise attention map and the second bitwise attention map, and
wherein, based on that the semantic error occurs, the second node determines whether to perform early stopping through the early stopping threshold based on the first bitwise attention map and the second bitwise attention map.

**17.** The method of claim 16,

wherein, based on that the second node performs the early stopping, the second node performs a system failure operation, and
wherein, based on the system failure operation, the second node performs at least one of system failure message transmission, semantic error correction re-configuration, or data update.

**18.** The method of claim 16,
wherein, based on that the second node does not perform the early stopping, the second node stores at least one of residual area-based semantic-level reconstructed data or synthesized data, and transmits, to the first node, a bitwise attention map based on the stored data after storing the bitwise attention map based on the stored data.

**19.** A first node in a wireless communication system, the first node comprising:

a transceiver; and
a processor connected to the transceiver,
wherein the processor is configured to control the first node to perform operations comprising:
establishing a connection with a second node;
receiving, from the second node, a request for first node capability information;
based on the request for the first node capability information, transmitting, to the second node, the first node capability information;
receiving, from the second node, semantic communication indication information; and
transmitting, to the second node, data encoded with an attention technique through semantic communication-related information in the semantic communication indication information,
wherein the first node transmits, to the second node, the data by encoding the data based on whether a first bitwise attention map is received from the second node and a semantic data retransmission count.

**20.** A second node in a wireless communication system, the second node comprising:

a transceiver; and
a processor connected to the transceiver,
wherein the processor is configured to control the second node to perform operations comprising:

establishing a connection with a first node;
transmitting, to the first node, a request for first node capability information;
based on the request for the first node capability information, receiving, from the first node, the first node capability information;
transmitting, to the first node, semantic communication indication information; and
receiving, from the first node, data encoded with an attention technique through semantic communication-related information in the semantic communication indication information,
wherein the second node performs a downstream task through the data received from the first node based on whether semantic error check is performed and whether a semantic error occurs.

**21.** A device, comprising:

at least one memory; and

at least one processor operably connected to the at least one memory,
wherein the at least one processor is configured to control the device to perform operations comprising:

establishing a connection with another device;
receiving, from the another device, a request for device capability information;
based on the request for the device capability information, transmitting, to the another device, the device capability information;
receiving, from the another device, semantic communication indication information; and
transmitting, to the another device, data encoded with an attention technique through semantic communication-related information in the semantic communication indication information,
wherein the device transmits, to the another device, the data by encoding the data based on whether a first bitwise attention map is received from the another device and a semantic data retransmission count.

**22.** A non-transitory computer-readable medium storing at least one instruction, the non-transitory computer-readable medium comprising:

the at least one instruction being executable by a processor,
wherein the at least one instruction is configured to control a device to perform operations comprising:

establishing a connection with another device;
receiving, from the another device, a request for device capability information;
based on the request for the device capability information, transmitting, to the another device, the device capability information; and
transmitting, to the another device, data encoded with an attention technique through semantic communication-related information in the semantic communication indication information,
wherein the device transmits, to the another device, the data by encoding the data based on whether a first bitwise attention map is received from the another device and a semantic data retransmission count.

# FIG. 1

100
Home Appliance
100e
100f
IoT device
130
150a
120
150a
Hand-held device
100d
AI Server/ device
100g
150a
120
Network
150a
XR device
100c
100a
Robot
150a
120a
150a
120
150a
120
150a
100b-1
Vehicle
Vehicle
100b-2
150b

# FIG. 2

200
208
202
206
First Device
Processor(s)
Transceiver(s)
Memory(s)
204

FIG. 3
300
codewords
Scrambler
310
Modulator
320
layer Mapper
330
layers
Precoder
340
Resource mapper
350
Signal Generator
360

# FIG. 4

Terminal
(410)
Base Station
(420)
synchronization (401)
System information acquisition (403)
random access (405)
control information signaling (405)
data transmission/reception (407)

FIG. 5

Touch
Taste
Five Senses
Sight
Hear
Smell
BCI and AI
SDN
FSO communication
Underwater communication
sCell-UE
sCell-APs
Dense sCell-RAN
sCell-APs
sCell-UE
sCell-APs
sCell-UE
virtual remote assistance
3D Story virtualization
3D gaming
3D virtual cordination
New virtual world
MR
AR
M-UE
UE
UAV network
Controller
UAV BS
M-UE
Drone network
M2M & M2H communication
Ground/satellite integration
UM-MIMO BS
VLC
VR
Smart Home
eHealth remote monitoring
Robotics & automation
UM MIMO BS
FSO backhaul
Smart City
VLC
Autonomous vehicle

# FIG. 6

Wavelength
10⁸m
1m
10mm
1mm
0.1mm
700nm
390nm
10nm
0.01nm
Radio
Microwave
mmWave
Terahertz
Infrared
Visible
Ultraviolet
X-Ray
Gamma-Ray
Radiation Type
Frequency
3 Hz
300 MHz
30 GHz
300 GHz
3 THz
430 THz
730 THz
30 PHz
30 EHz
Mega: 10⁶
Giga: 10⁹
Tera: 10¹²
Peta: 10¹⁵
Exa: 10¹⁸

FIG. 7

Base band
Signal Generator
IF up mixer
IF local Oscillator
PA
Filter
RF up mixer
X3
Tripler
X2
Multipler
Horn ANT
or
Cassegrain Lens ANT
LNA
RF down mixer
IF down mixer
drive AMP
IF local Oscillator (IF PLL)

FIG. 8

THz lens
UTC-PD
Optical coupler
Modulator
Optical fiber
Laser
Laser

f0
AWG
IQ mod
EDFA
f0−fRF
PD
RF
amp
f0−fRF
EDFA
Plasmonic
mixer
OSA
EDFA
f0
DSO
PD
PD
90°
Hybrid
Optical fiber
Electrical
Wireless


FIG. 9

Optical RF signal Generator
OFCG:optical frequency comb generator
Data signal Generator
Optical Modulator
OAF
Mostly Non-liner element
O/E Converter
AF
Antenna

FIG. 10

FIG. 11
Microwave contact
Optical waveguide
x-cut
z-cut
(a)
hot
Optical waveguide
x-cut
Dual-drive
hot
hot
hot
z-cut
(d)
Phase modulator
Laser
OPA
Data(E)
O/E Converter
Optical mixer role
Modulated signal
(c)
Intensity modulator
Laser
OPA
Data(E)
O/E Converter
Optical mixer role
Modulated signal
(d)

# FIG. 12

x0=1
x1
x2
xd
X1
X1
X1
Xd
Σ
s
σ(•)
+1
X1
X2
Xd
zi

# FIG. 13

input layer
hidden layer
output layer
+1
X1
X2
Xi
Xd
+1
Z1
Z2
Zj
ZH
S1
S2
SK
input-hidden
weight
W d x H
hidden-output
weight
W H x K

# FIG. 14

C:Effectiveness
Source
(effectiveness factors)
Destination
Intended message
B:Semantic
Local knowledge
shared knowledge
Local knowledge
Semantic Transmitter
Semantic Receiver
Semantic Noise
Expressed message
A:Technical
Technical message
Transmitter
Receiver
Physical Channel
Technical Noise

# FIG. 15

The
agreement
on
the
European
Economic
Area
was
signed
in
August
1992
.
<end>
L'
accord
sur
la
zone
économique
européenne
a
été
signé
en
août
1992
.
<end>
It
should
be
noted
that
the
marine
environment
is
the
least
known
of
environments
.
<end>
Il
convient
de
noter
que
l'
environnement
marin
est
le
moins
connu
de
l'
environnement
.
<end>
Destruction
of
the
equipment
means
that
Syria
can
no
longer
produce
new
chemical
weapons
.
<end>
La
destruction
de
l'
équipement
signifie
que
la
Syrie
ne
peut
plus
produire
de
nouvelles
armes
chimiques
.
<end>
"
This
will
change
my
future
with
my
family
"
,
the
man
said
.
<end>
"
Cela
va
changer
mon
avenir
avec
ma
famille
"
,
a
dit
l'
homme
.
<end>

(a)

(b)

(c)

(d)

FIG. 16

L CE
L teacher
FFN
self-attention
class token
1610
patch tokens
1620
distillation token
1630

S
Background Knowledge
Semantic Encoding ($S_β$)
Channel Encoding ($C_α$)
X
Semantic Channel
Physical Channel
Y
Channel Decoding ($C_δ^{-1}$)
Background Knowledge
Semantic Decoding ($S_χ^{-1}$)
$\hat{S}$
Transmitter
1710
Receiver
1720

FIG. 17

Model
W
Source
1810
Sent message
X
"coffee machine"
"Xerox"
0.9
0.1
1
p → ff
Received message
Y
"coffee machine"
"coffee machine"
"Xerox"
Model
W'
Destination
1820

FIG. 18

FIG. 19

1910
Compression
Compression
1920
Latent representation y
Channel
1930
Reconstructed ŷ
Decompression
1940
Reconstructed x̂
Tasks
f1(x̂), f2(x̂)
multiple-tasks

2010
Source
Image x
① Encoder
2011
1. Semantic representations
2. Attention Matrix
② Generate Attention map
1. Semantic representations
2. Threshold-based bitwise attention map
Channel
2020
Destination
2021
Decoder ③
Reconstruct image x̃
④ Encoder
2022
Attention matrix
⑤ Generate Attention map
Threshold-based bitwise attention map
Received bitwise attention map
⑥ Error check
⑦
Downstream task 1
Downstream task 2
Downstream task 3
Downstream task N

FIG. 20

2110
Source
Original data
2111
Semantic data retransmission count checker
count ≤ N
count > N
2115
System failure operator
System failure message
2112
Bitwise attention map receipt checker
Received = True
Received = False
2116
Residual area data extractor
Received attention map
Residual area data
Attention map information
2113
Data type selection
Encoder
Attention matrices
Semantic representation
2117
Bitwise attention map generator
2118
Saving data
2114
Semantic packet generator
Bitwise attention map
Semantic packets


FIG. 21

FIG. 22

2210
Result of applying
an original data-based
bitwise attention map
vs
2220
Result of applying
a noise residual
area data (semantic-level
reconstructed data)-based
bitwise attention map
Error detection
2230
Residual (excluding
overlapping portions of
respective bitwise
attention maps) mask
2240
Residual area-based
data obtained
by applying
the residual mask

# FIG. 23

2310

input residual
area based data

2320

Result of applying a bitwise
attention map to residual area data

# FIG. 24

2410
Destination
Received semantic packets
2411
Semantic packet decomposer
Received semantic representation
2412
Decoder
Reconstructed data
2413
Reconstructed data type checker
data type = Residual area data
2414
Checker for performing semantic error checking
data type = Original data
Error check = No / Data type = composited data
Error check = yes / Data type = residual data
Error check = No
Received bitwise attention map
2415
Data type configurator
2416
Encoder
Attention matrices
2417
Attention map generator
2418
Composited data
Data compositor
Bitwise attention map
Saved reconstructed data (Semantic error correction target)
2419
Semantic error checker
Error occur = False
Data type = residual area data
2420
Reconstructed data type checker
Data type ≠ residual area data
Saved bitwise attention map
Error occur = True
2421
Early stopping checker
Early stop = True
Early stop = False
Save data
Downstream task 1
Downstream task 2
Downstream task 3
Downstream task N
2422
bitwise attention map based packet generator
Bitwise attention map based packets
2423
System failure operator
System failure message

FIG. 25

2510
Residual area data
2520
Result of applying
a bitwise attention map
transmitted from a source
2530
Result of applying
a bitwise attention map
obtained at a destination
2540
Noise residual area data
(semantic-level
reconstructed data)

# FIG. 26

2610
2620
2630
+
=
Noise residual area data
(semantic-level
reconstructed data)
Noise data based on
original data
(target of semantic
error correction)
Synthesized data
2640
2650
VS
Result of applying
an original data-based
bitwise attention map
Result of applying
a synthesized data-based
bitwise attention map

FIG. 27
2710
Result of applying a bitwise attention map transmitted from a source
vs
2720
Result of applying a bitwise attention map obtained at a destination
2730
Bitwise attention map for a non-semantic error portion obtained by performing an ARC operation
2740
Result obtained by masking semantic-level reconstructed data with a bitwise attention map (residual area-based data)
2740
Result of extracting a portion to be synthesized from semantic-level reconstructed data including noise
+
2750
Target of semantic error correction (original data-based)
=
2760
Synthesized data

FIG. 28

2810
Synthesized data
(data on which semantic error
correction is performed)
2820
Result of applying
an original data-based
bitwise attention map
VS
2830
Result of applying
a synthesized data-based
bitwise attention map

# FIG. 29

2910
2920
First node
Second node
Synchronization
Request for capability information
Capability information
Check whether to perform semantic communication
semantic communication-related information
Store the semantic communication-related information

# FIG. 30

Start
3201
Existence of data to send
Existence of data = No
Existence of data = Yes
S3002
Semantic data retransmission count < N?
N=maxSemanticRetCnt
count ≤ N
Existence of data = Yes
S3003
Perform a system failure operation
1. Set semantic data retransmission count = 0
2. Flush saved attention map information
S3004
Set input = new transmission data
Received = Yes
Received = No
S3005
Input = New transmission data
S3006
count = count + 1
S3007
Extract residual area data
S3008
Set input = Residual area based data
S3009
Encoding
Using
1. Metrics for attention matrix acquisition
2. Attention head fusion metric
3. Discard ratio
S3010
Generate bitwise attention map
Using threshold$_{att_map}$
S3011
Send semantic packets
1. Semantic representation
2. Bitwise attention map
S3012
Save bitwise attention map generated from source
End

# FIG. 31

Start
S3101
Received semantic packets?
Received = No
Received = Yes
S3102
Decompose semantic packets
S3103
Decoding
Using semantic representations
Semantic level Reconstructed data
S3104
Check Reconstructed Data type
data type = Original data
S3105
Input = Original area based reconstructed data
Data type = Residual area based Reconstructed data
S3106
Determine whether to perform semantic error checking
Error check = Yes
S3107
Input = Residual area based reconstructed data
Error check = No
S3108
Composite data
Using
1. Residual area based reconstructed data
2. Saved reconstructed data (Semantic error correction target)
S3109
Input = Composited data base reconstructed data
S3110
Encoding
Using
1. Metrics for attention matrix acquisition
2. Attention head fusion metric
3. Discard ratio
S3111
Generate bitwise attention map
Using threshold$_{att_map}$
S3112
Detect semantic error
Using threshold$_{ARC}$
S3113
Error occurs?
Error occur = True
Error occur = False
S3114
Check the encoder input data type
Data type = residual area based reconstructed data
Data type ≠ residual area based reconstructed data
S3115
Perform downstream task
S3116
Perform early stopping?
Early stop = True
S3117
Perform a system failure operation
Early stop = False
S3118
Save data
1. Reconstructed data or composited data
2. Bitwise attention map based on 1.
3. Original data based attention map
S3119
Send bitwise attention map related information
End

# FIG. 32

START
Establishing a connection with a second node
S3210
Receiving, from a second node,
a request for first node capability information
S3220
Based on a request for first node capability information, transmitting, to a second node, first node capability information
S3230
Receiving, from a second node,
semantic communication indication information
S3240
Transmitting, to a second node, data encoded with an attention technique through semantic communication-related information in semantic communication indication information
S3250
END

# FIG. 33

START
Establishing a connection with a first node
S3310
Transmitting, to a first node,
a request for first node capability information
S3320
Based on a request for first node capability
information, receiving, from a first node,
first node capability information
S3330
Transmitting, to a first node,
semantic communication indication information
S3340
Receiving, from a first node, data encoded
with an attention technique through semantic
communication-related information in semantic
communication indication information
S3350
END

# INTERNATIONAL SEARCH REPORT

International application No.
**PCT/KR2023/018885**

**A. CLASSIFICATION OF SUBJECT MATTER**

**H04L 1/00**(2006.01)i; **H04L 1/08**(2006.01)i

According to International Patent Classification (IPC) or to both national classification and IPC

**B. FIELDS SEARCHED**

Minimum documentation searched (classification system followed by classification symbols)

H04L 1/00(2006.01); G06N 3/04(2006.01); G06N 3/08(2006.01); G06V 10/42(2022.01); G06V 20/52(2022.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 시멘틱(semantic), 능력(capability), 어텐션(attention), 오류(error), 인코딩(encoding)

**C. DOCUMENTS CONSIDERED TO BE RELEVANT**

| Category* | Citation of document, with indication, where appropriate, of the relevant passages | Relevant to claim No. |
|---|---|---|
| A | WO 2023-068398 A1 (LG ELECTRONICS INC.) 27 April 2023 (2023-04-27)<br>See paragraphs [0231]-[0234], [0314]-[0315], [0319] and [0322]. | 1-22 |
| A | CN 116977923 A (XIDIAN UNIVERSITY) 31 October 2023 (2023-10-31)<br>See claims 1-8. | 1-22 |
| A | WANG, Ouya et al. Learn to Adapt to New Environment from Past Experience and Few Pilot. Computer Science, Information Theory (cs.IT); Machine Learning (cs.LG). arXiv:2209.02649v1. 02 September 2022.<br>See pages 1-6. | 1-22 |
| A | US 2023-0291497 A1 (LENOVO (SINGAPORE) PTE. LTD.) 14 September 2023 (2023-09-14)<br>See paragraphs [0107]-[0127]; and claim 21. | 1-22 |
| A | YOO, Hanju et al. On the Role of ViT and CNN in Semantic Communications: Analysis and Prototype Validation. Electrical Engineering and Systems Science, Signal Processing (eess.SP), arXiv:2306.027 59v1. 05 June 2023.<br>See pages 1-9. | 1-22 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **19 August 2024** | **19 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/018885**

| Patent document cited in search report | Publication date (day/month/year) | Patent family member(s) | Publication date (day/month/year) |
|---|---|---|---|
| WO 2023-068398 A1 | 27 April 2023 | None | |
| CN 116977923 A | 31 October 2023 | None | |
| US 2023-0291497 A1 | 14 September 2023 | US 11824653 B2 | 21 November 2023 |
| | | US 2023-0198663 A1 | 22 June 2023 |
| | | WO 2023-112009 A1 | 22 June 2023 |

Form PCT/ISA/210 (patent family annex) (July 2022)